# EUROPEAN PATENT SPECIFICATION

(11) **EP 2 979 832 B1**
(45) Date of publication and mention of the grant of the patent: **17.01.2024**
(21) Application number: 14776369.2
(22) Date of filing: 27.03.2014
(51) Int. Cl.: B23B 35/00, B26F 1/16

(54) **CUTTING METHOD**
SCHNEIDVERFAHREN
PROCÉDÉ DE COUPE

(30) Priority: 27.03.2013 JP 2013065739; 19.11.2013 JP 2013239019; 19.11.2013 JP 2013239018
(43) Date of publication of application: 03.02.2016
(73) Proprietor: Mitsubishi Gas Chemical Company, Inc., Tokyo 100-8324 (JP)
(72) Inventor: UMEHARA, Noritsugu, Nagoya-shi Aichi 464-8601 (JP); TOKOROYAMA, Takayuki, Nagoya-shi Aichi 464-8601 (JP); MATSUYAMA, Yousuke, Yonezawa-shi Yamagata 992-1128 (JP); HORIE, Shigeru, Tokyo 100-8324 (JP); HASAKI, Takuya, Tokyo 100-8324 (JP)
(74) Representative: Hoffmann Eitle
(86) International application number: PCT/JP2014/059000
(87) International publication number: WO 2014/157570

(56) References cited:
- EP-B1- 1 174 006
- DE-A1-102010 031 130
- JP-A- 2000 334 697
- JP-A- 2002 292 599
- JP-A- 2004 338 271
- JP-A- 2008 183 626
- JP-U- H0 617 847
- US-A- 4 915 550
- US-A1- 2002 003 991
- US-A1- 2003 100 456
- US-A1- 2008 100 291
- US-A1- 2012 024 586
- DATABASE WPI Week 201246 Thomson Scientific, London, GB; AN 2012-H64922 & WO 2012/091179 A1 (MITSUBISHI GAS CHEM CO INC) 5 July 2012 (2012-07-05)

## Description

### Technical Field

The present invention relates to a cutting method for cutting a fiber reinforced composite material or a metal and to methods for producing a fiber reinforced composite material and a metal.

### Background Art

Fiber reinforced composite materials represented by fiber reinforced plastics (FRP), and, among others, carbon fiber reinforced plastics (CFRP) have larger tensile strength and tensile elastic force and a smaller density as compared with glass fiber reinforced plastics (GFRP), aramid fiber reinforced plastics (AFRP), and stainless steel materials (SUS), and therefore there is a tendency that these plastics have frequently been used for outside plates or the like of air crafts and vehicles in recent years. The CFRP here denote plastics produced by laminating one or two or more prepregs obtained by impregnating a matrix resin into carbon fiber and then conducting heat molding or heat and pressure molding. Members formed from the CFRP are fixed to a structure using fastening elements such as bolts or rivets. Therefore, when the CFRP are fixed to a structure such as an air craft part, cutting, and, among others, boring for boring a plurality of holes in the CFRP for the fastening elements to pass through becomes necessary.

Some technologies for obtaining high-quality holes in boring of the CFRP have already been proposed. Methods in which the shape of a tool for example or the curvature of a rake face or the tip angle of a drill for example is changed in stages have been given as examples (see, for example, Patent Document 1 and Patent Document 2). Moreover, since the CFRP are difficult-to-cut materials, drilling lifetime is very short in the case where drilling of the CFRP is performed. Therefore, methods for reducing the load to a drill to avoid lowering of the processing lifetime of the drill by changing the shape of the drill or changing processing conditions have been given as examples (see, for example, Patent Document 3 and Patent Document 4). Moreover, in processing of the fiber reinforced plastics other than drilling, cutting with a processing apparatus using high power laser and ultrashort pulse laser together, and other processing have been given as examples (see, for example, Patent Document 5). Moreover, in the field of printed circuit boards that is different from the field of the CFRP, a method for boring in which a composite film made of a synthetic resin material and a composite material such as carbon fiber is arranged on the drill-entering face and is used as a stiffening plate has also been given (see, for example, Patent Document 6). However, in the method described in Patent Document 6, the CFRP are the stiffening plate and are not the object of cutting, and the technology on a stiffening plate for processing the CFRP does not exist. Furthermore, in the method described in Patent Document 6, it is insisted that the misregistration of the drill is prevented and the positional accuracy of forming holes is outstandingly improved when the stiffening plate is made using carbon fiber which is a difficult-to-cut material and with which the drill blade is liable to wear, however there is no support by Examples.

Moreover, the main constituent of the materials for machine body structures (structure materials) of air crafts is a metal material, and aluminum alloys account for most of the metal materials. Moreover, titanium alloys, stainless steel, and so on that are heat resistant alloys are used at portions the temperature of which can easily become higher than the other portions in the machine body structure, for example, around jet exhaust portions and an afterburner. Furthermore, when the speedup of air crafts advances in the future, the strength of the conventional aluminum alloys is lowered due to aerodynamic heating. Therefore, from this time forward, it is expected that the titanium alloys or the stainless steel having a higher hardness is used as the main constituent of the machine body structures. It is necessary to perform boring with a drill to these structure materials that constitute the machine body structure of air crafts in order to fasten, with bolts, metal materials, or a metal material and another structure material of different material quality such as a CFRP (Carbon fiber reinforced plastic).

In boring of metals, some technologies have already been proposed. For example, since the titanium alloy materials are difficult-to-cut materials, drilling lifetime is very short. Facing such a problem, a processing method spraying a cutting oil and a method for reducing the load to a drill to avoid lowering of the processing lifetime of the drill by changing the shape of the drill have been given as examples (see, for example, Patent Document 7 and Patent Document 8).

Moreover, with respect to boring regarding the CFRP as fiber reinforced composite materials, a method in which the shape of a cutting tool, for example, the curvature of a rake face or the tip angle of a drill is changed in stages has been given as an example (see, for example, Patent Document 2).

On the other hand, with respect to the field of printed circuit boards that is different from the field of processing of metals, a method for boring using an entry sheet has been proposed (see, for example, Patent Document 9). However, materials used for printed circuit boards are made of an organic compound, glass cloth, and a thin copper foil, therefore the load to the drill is small, and the processability is extremely easy when compared with the processability of metals.

### List of Prior Art Documents

### Patent Document

Patent Document 1: Japanese Patent Laid-Open No. 2012-210689
Patent Document 2: Japanese Patent Laid-Open No. 2012-223882
Patent Document 3: Japanese Patent Laid-Open No. 2009-241239
Patent Document 4: Japanese Patent Laid-Open No. 2009-39810
Patent Document 5: Japanese Patent Laid-Open No. 2011-56583
Patent Document 6: Japanese Patent Laid-Open No. 2000-61896
Patent Document 7: Japanese Patent Laid-Open No. 2006-150557
Patent Document 8: Japanese Patent Laid-Open No. 2002-210608
Patent Document 9: Japanese Patent Laid-Open No. 2003-175412

WO 2012/091179 A1 discloses a cutting method according to the preamble of claim 1.

### Summary of Invention

### Problems to be Solved by Invention

Boring to the CFRP is usually performed using a drill. Drilling lifetime is extremely short in boring of the CFRP with a general drill. When the number of processed holes is increased, wear occurs to the drill blade, and quality of the processed holes is lowered. Specifically, the inner diameter of the processed holes is liable to become small, fluff of carbon fiber becomes liable to occur at the exit portion where the drill penetrates, and interlayer peeling between laminated prepregs also becomes liable to occur. Furthermore, the inner diameter of processed holes is non-uniform due to wear, and interlayer peeling sometimes occurs from the unevenness as a starting point. Such phenomena are recognized as major defects. As describe above, there is a high possibility that problems on quality occur to processed holes attributable to the wear of the drill blade. Facing such problems, a particularly high-quality boring is required particularly in the production and so on of the structures using the CFRP for air crafts, and it becomes extremely important to solve problems such as fluffing and interlayer peeling.

Now, there exist a great variety of CFRP. Products of the CFRP for general use strike a balance between costs and performance using prepregs obtained by impregnating a matrix resin into carbon fiber to make the thickness of the resin between prepregs thick, thereby reducing the amount of the carbon fiber used. Moreover, a prepreg (cloth material) obtained by impregnating a matrix resin into carbon fiber woven cloth is used for the surface layer of the CFRP, however there is a laminate configuration, in the inner portion, using a prepreg (UD material, Unidirectional material) obtained by impregnating a matrix resin into carbon fiber in which the fiber direction is arranged in one direction. Needless to say, there also exists a configuration in which all the layers including a surface layer are laminated by the UD material. Furthermore, when the UD material is used, there also exists a configuration in which prepregs are laminated in such a way that the fiber direction is rotated by 45° or 90° between prepregs. Or, there also exists a pellet-shaped injection molding material in which short fiber obtained by severing carbon fiber is dispersed in a matrix resin to strengthen the matrix resin. The injection molding CFRP is a material applied to, for example, automobile use. On the other hand, high strength and high reliability over several tens of years are required for products of the CFRP for air craft use because of their applications. Furthermore, defects within the CFRP cannot be detected in appearance. Therefore, by using prepregs in which the amount of the matrix resin impregnated into the carbon fiber is strictly controlled in particular and adjusting the thickness of the resin layers between prepregs to be thin to densely overlay the carbon fiber, the variation of strength generated in the carbon fiber layers and layers made of resins alone is reduced to achieve the high strength and the high reliability. And the prepreg for air craft use is not limited to the cloth materials using the carbon fiber woven cloth, UD materials in which the fiber direction of the UD materials is appropriately rotated in order to secure isotropy are also used. Moreover in the matrix resins for air craft use, the compositions putting priority particularly on a high toughness in addition to adhesion properties are applied.

In boring of the CFRP, the quality problem of processed holes becomes liable to occur as the wear of the tool progresses and the cutting resistance becomes larger. Particularly in the high-strength CFRP or the like for air craft use, the carbon fiber densely exists, and therefore the frequency of rubbing the carbon fiber by a drill is increased and the wear of the drill progresses more rapidly. As a countermeasure, the time of tool exchange is brought forward for maintaining hole quality, and the present situation is that the ratio of tool costs in processing costs becomes high. Moreover, in the CFRP using a UD material, when the fiber direction of the carbon fiber and the rotation direction of the drill blade relative to a direction that is parallel to the carbon fiber direction are taken notice of, the drill blade rubs the bunch of carbon fiber in a direction parallel to the bunch of the carbon fiber at an angle of 0° and 180°, the angle being parallel to the carbon fiber direction. At an angle of 90° and 270°, the drill blade is orthogonal to the bunch of the carbon fiber and is liable to shear the bunch of carbon fiber. At angle of 45° and 225°, the drill blade enters the CFRP in such an angle that the drill blade bites into and scoops out the bunch of carbon fiber, and, at an angle of 135° and 315°, the drill blade rubs the bunch of carbon fiber while tracing the bunch of carbon fiber. Therefore, the following problem occurs: the fiber-buckling portion is liable to occur in the vicinity of an angle of 45° and 225°.

As described in Patent Documents 1 to 6, the improvements in processability of the fiber reinforced composite materials (for example, the CFRP) to which boring is hard to apply have been studied from the standpoint of tools, however the effect is insufficient.

Thus, the first problem of the present invention aims at improving the processability with another approach other than the tools in cutting of the fiber reinforced materials (for example, the CFRP), and is to provide an entry sheet with which the wear of the drill is suppressed and with which high-quality processed holes the inner diameter of which is uniform can be obtained by reducing the load to the drill as compared with, for example, the conventional boring of the fiber reinforced composite materials (for example, the CFRP).

Moreover, boring to a metal is generally performed using a drill, however drilling lifetime is short even when a drill dedicated to cutting metals is used, and drilling lifetime is extremely short in the case where a general drill is used. Moreover, as the number of processed holes increases, wear occurs to the drill blade, and the quality of the processed holes is lowered. Specifically, the inner diameter of the processed holes is liable to become small, and burrs are also liable to be generated at the exit portion where the drill penetrates. Furthermore, the gap is generated between the metal material and the structure material such as the CFRP having another material quality, which are fastened by bolts, due to the wear of the drill, and it sometimes occurs that a lift is generated between these structure materials and chips go into the generated gap. Such phenomena are recognized as major defects. As describe above, there is a high possibility that problems on quality occur to processed holes attributable to the wear of the drill blade. In such a situation, a particularly high-quality boring is required in the production and so on of the structures using the titanium alloy materials for air crafts, and it becomes extremely important to solve the above-described problems such as the drilling lifetime and the lift generated between the metal material and the different kind of structure material.

As described in Patent Documents 2, 7, and 8, the improvements in processability of metals to which boring is hard to apply have been studied from the standpoint of cutting tools and cutting methods, however the effect is insufficient. Moreover, the present inventors have also studied on the improvements in processability with an entry sheet for printed circuit boards, however the effect is insufficient.

Thus, the second problem of the present invention aims at, in cutting of metals, improving the processability of the metals with another approach other than cutting tools, and is to provide an entry sheet with which the wear of the drill is suppressed and with which prolonging of the drilling lifetime can be achieved by reducing the load to the drill as compared with, for example, the conventional boring of the metals.

Moreover, in the case where boring of a metal is performed with a drill, the frictional heat is generated between the rotating drill and the metal, and the temperature around the processed holes rises locally. Accordingly, in the case where the number of processed holes are large, the heat is accumulated in the metal as the drill and the workpiece. In the case of a metal having a low thermal conductivity, since heat dissipation is insufficient, the temperature around the processed holes rises. When at this time the temperature of the metal rises, the metal softens, and therefore burrs are generated at the exit portion where the drill in a processed hole penetrates. Moreover, metal chips are welded to the drill due to processing heat, excessive load is applied to the drill, and it sometimes occurs that the processing apparatus stops. As describe above, there is a high possibility that the problems on quality occur to the processed holes attributable to the heat accumulation during boring. In such a situation, a particularly high-quality boring is required in the production and so on of the structures using the titanium alloy materials for air crafts, and it becomes extremely important to solve the above-described problem regarding the burrs.

Wet processing using a cutting oil or the like has conventionally been performed for the purpose of preventing such heat accumulation at the cutting portion and the drill, however, in the case of wet processing, a cleaning process becomes necessary at the end of cutting. Furthermore, in the case where the oil is left around or inside the processed holes, there is a possibility that the deterioration of screws as fastening tools in fastening via through holes occurs or the looseness occurs at a fastening portion, and there is a risk that these defects lead to fatal accidents.

As described in Patent Document 2, 7, and 8, the improvements in processability of metals to which boring is hard to apply have been studied from the standpoint of cutting tools and cutting methods, however the effect is insufficient.

Thus, the third problem of the present invention is to provide a cutting method by which the amount of burrs produced around processed holes can be reduced as compared with the conventional cutting methods by suppressing the heat accumulation around the processed holes in cutting (for example, boring with a drill) of a fiber reinforced composite material and/or a metal. Moreover, the third problem of the present invention is to provide high-quality through holes formed by the cutting method.

### Means for Solving Problems

The present inventors have made various studies for the purpose of solving the first problem to find that: by arranging an entry sheet (for example, a resin sheet having lubricity) on a cutting tool (for example, a drill)-entering face on a fiber reinforced composite material (for example, the CFRP) in cutting (for example, boring) a fiber reinforced composite material (for example, the CFRP), the cutting stress such as the thrust load or torque is reduced when the cutting tool (for example, a drill) enters the fiber reinforced composite material (for example, the CFRP), thereby reducing the load to the cutting tool (for example, a drill) to suppress the wear of the cutting tool (for example, a drill); therefore, in the case of drilling, high-quality processed holes the inner diameter of which is uniform are obtained, and have completed the present invention.

Moreover, the present inventors have made various studies for the purpose of solving the second problem to find that, in cutting (for example, boring) a metal, an entry sheet (for example, an entry sheet containing a resin sheet having lubricity) that is arranged on the cutting tool (for example, a drill)-entering face on the metal reduces the cutting stress such as the thrust load or torque when the cutting tool (for example, a drill) enters the metal, thereby reducing the load to the cutting tool (for example, a drill) to suppress the wear of the cutting tool (for example, a drill). Finally, the present inventors have found that the entry sheet (for example, an entry sheet containing a resin sheet) prolongs the cutting (for example, drilling) lifetime of the cutting tool (for example, a drill), and have completed the present invention.

Furthermore, the present inventors have made various studies for the purpose of solving the third problem to find that, by performing cutting while cooling the cutting portion and/or the cutting tool (for example, a drill) using a gas in cutting (for example, boring) a fiber reinforced composite material and/or a metal, the heat generated by frictional heat between the fiber reinforced composite material and/or the metal and cutting tool (for example, a drill) can be suppressed, thereby, in the case of drilling, making it possible to reduce the amount of burrs produced around the processed holes and to provide high-quality processed holes. Moreover, the present inventors found that, by using an entry sheet having a metal foil and/or a resin sheet together with cooling in cutting (for example, drilling), cutting (for example, drilling) lifetime is prolonged, and have completed the present invention.

That is to say, the present invention relates to a method for cutting a fiber reinforced composite material and/or a metal using an entry sheet which comprises a resin sheet comprising a solid lubricant selected from the group consisting of graphite, molybdenum disulfide, tungsten disulfide, molybdenum compounds, polytetrafluoroethylenes and polyimides, characterized in that the fiber reinforced composite material comprises a carbon fiber reinforced plastic, the metal comprises a titanium alloy or an aluminum alloy, the cutting is performed while cooling a cutting portion and/or a cutting tool using a gas, an amount of the gas supplied to the cutting portion and/or the cutting tool is 5 to 300 L/min, a gas outlet area in an apparatus for supplying the gas is 7 mm² to 2000 mm², and a distance between a gas outlet of the apparatus for supplying the gas and the cutting portion and/or the cutting tool is 100 mm to 500 mm.

In addition, the present invention relates to a method for producing a fiber reinforced composite material, comprising a step of cutting a fiber reinforced composite material by the cutting method and also to a method for producing a metal, comprising a step of cutting a metal by the cutting method.

Further embodiments of the methods of the present invention are described below and in the appended claims.

### Advantages of Invention

In cutting of a fiber reinforced composite material (for example, the CFRP), the load to a cutting tool (for example, a drill) can be reduced to suppress the wear of the cutting tool (for example, a drill) and, in the case of drilling, to obtain high-quality processed holes having a uniform inner diameter of the processed holes by using a cutting method of the present invention. As a result thereof, cutting (for example, drilling) that is high-quality and is excellent in productivity becomes possible.

Moreover, in cutting of a metal, by using the cutting method of the present invention, the load to the cutting tool (for example, a drill) can be reduced to suppress the wear of the cutting tool (for example, a drill) and to make the lifetime of cutting (for example, drilling) long. As a result thereof, cutting (for example, drilling) that is more excellent in productivity than that of the conventional technologies becomes possible.

Furthermore, in cutting of a fiber reinforced composite material which comprises a carbon fiber reinforced plastic and/or a metal which comprises a titanium alloy or an aluminum alloy, heat accumulation around a cutting portion generated during cutting can effectively be reduced according to the cutting method for cutting a metal of the present invention, and therefore high-quality processing in which the amount of burrs produced around the cutting portion is extremely smaller as compared with the conventional processing can be performed. Drilling that is more excellent in productivity and product quality than those in the conventional technologies is made possible particularly in drilling.

### Brief Description of Drawings

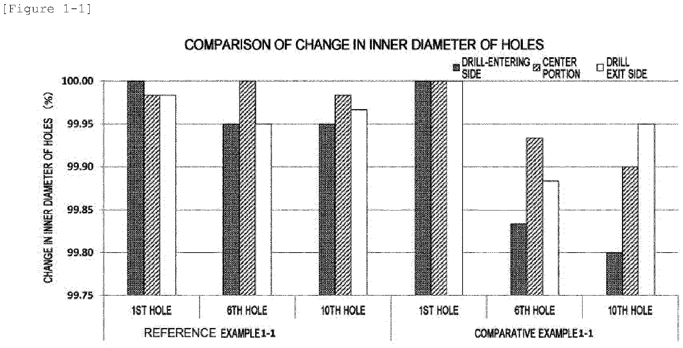

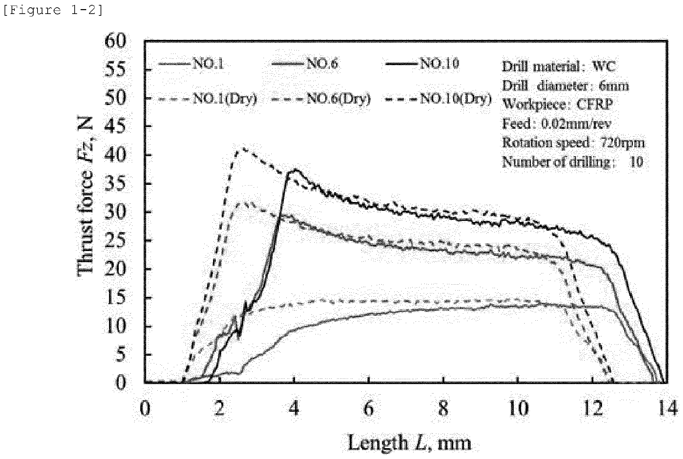

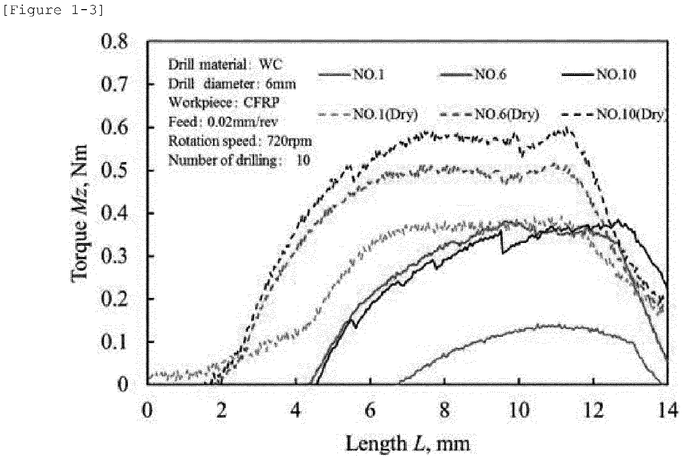

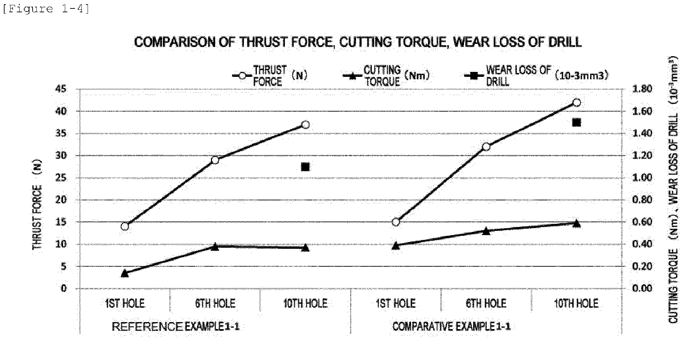

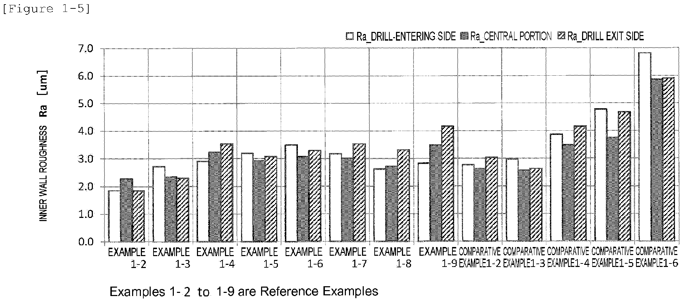

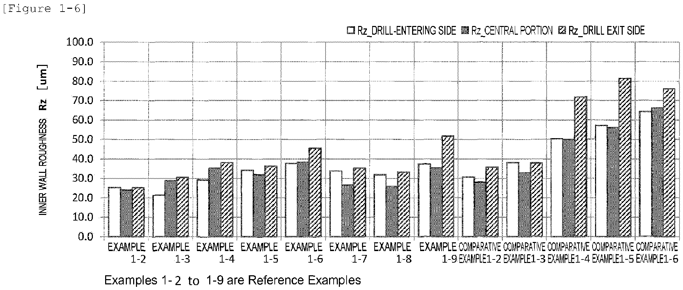

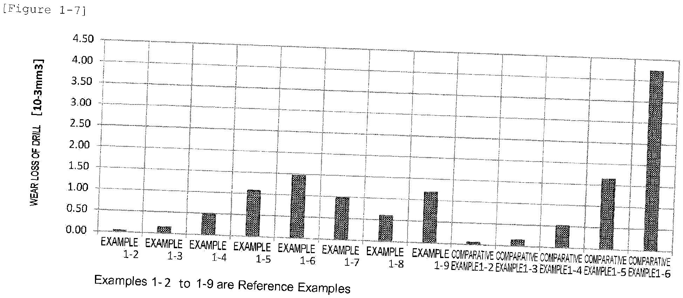

[Figure 1-1] Figure 1-1 shows comparison of change in inner diameter of holes in Reference Example 1-1 and Comparative Example 1-1.
[Figure 1-2] Figure 1-2 shows measurement results of thrust force in Reference Example 1-1 and Comparative Example 1-1.
[Figure 1-3] Figure 1-3 shows measurement results of cutting torque in Reference Example 1-1 and Comparative Example 1-1.
[Figure 1-4] Figure 1-4 shows comparison of thrust force, cutting torque, and the wear loss of drills in Reference Example 1-1 and Comparative Example 1-1.
[Figure 1-5] Figure 1-5 shows comparison of inner wall roughness (Ra: arithmetic average roughness) of holes in Reference Examples 1-2 to 1-9 and Comparative Examples 1-2 to 1-6.
[Figure 1-6] Figure 1-6 shows comparison of inner wall roughness (Rz: roughness obtained by taking an average of ten points) of holes in Reference Examples 1-2 to 1-9 and Comparative Examples of 1-2 to 1-6.
[Figure 1-7] Figure 1-7 shows comparison of the wear loss of drills in Reference Examples 1-2 to 1-9 and Comparative Examples 1-2 to 1-6.
[Figure 2-1] Figure 2-1 shows photographs of a tip of new drills used in Reference Examples 2-1 to 2-4, 2-8 and 2-9, Examples 2-5 to 2-7 and Comparative Examples 2-1 to 2-3.
[Figure 2-2] Figure 2-2 shows photographs of a tip of drills after processing in Reference Examples 2-1 to 2-4, 2-8 and 2-9, Examples 2-5 to 2-7.

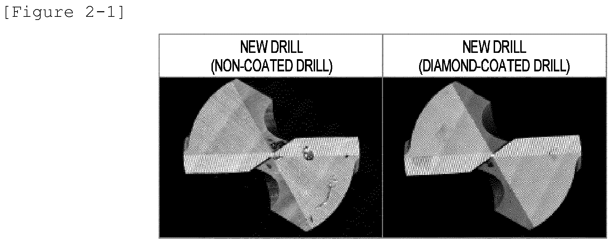

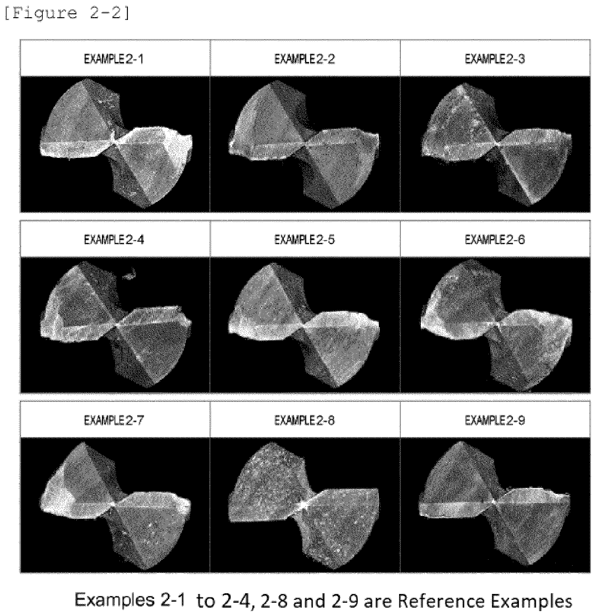

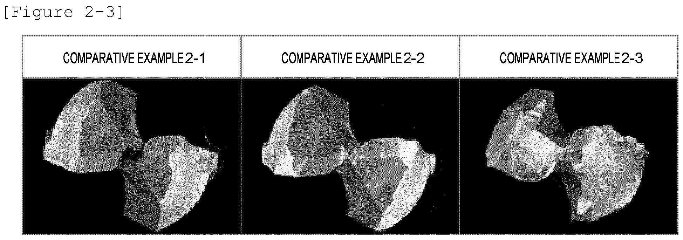

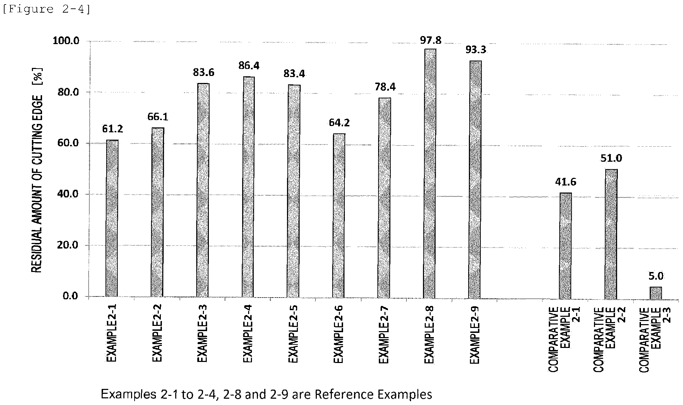

[Figure 2-3] Figure 2-3 shows photographs of a tip of drills after processing in Comparative Examples 2-1 to 2-3.
[Figure 2-4] Figure 2-4 shows the residual amount of cutting edge after processing relative to new drills in Reference Examples 2-1 to 2-4, 2-8 and 2-9, Examples 2-5 to 2-7 and Comparative Examples 2-1 to 2-3.

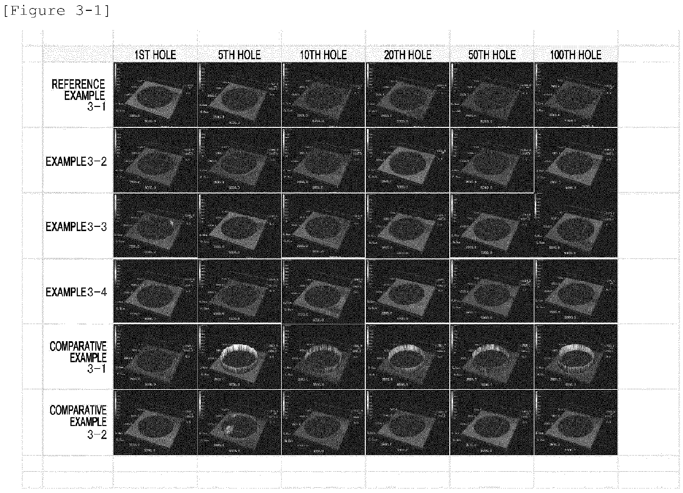

[Figure 3-1] Figure 3-1 shows photographs of a processed hole on the drill exit side of titanium alloy plates in Reference Example 3-1 and Examples 3-2 to 3-4 and Comparative Examples 3-1 to 3-2.

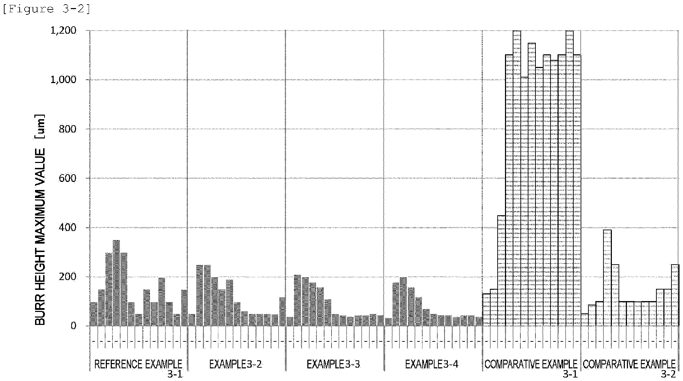

[Figure 3-2] Figure 3-2 shows burr heights on the drill exit side of titanium alloy plates in Reference Example 3-1 and Examples 3-2 to 3-4 and Comparative Examples 3-1 to 3-2.

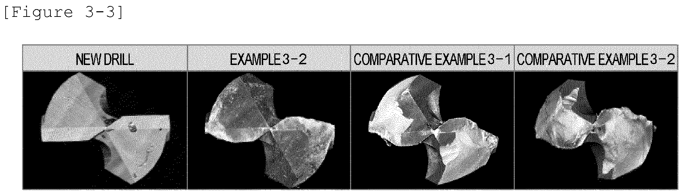

[Figure 3-3] Figure 3-3 shows photographs of a new drill used in Reference Example 3-1 and Examples 3-2 to 3-4 and Comparative Examples 3-1 to 3-2 and a tip of drills after processing in Example 3-2 and Comparative Examples 3-1 to 3-2.

### Mode for Carrying Out Invention

Hereinafter, the embodiments of the present invention (hereinafter also referred to as "the present embodiments") and reference embodiments, which are not part of the invention, will be explained. In addition, the following embodiments are exemplification for explaining the present invention, and the present invention is not limited only to the embodiments.

Entry sheets used in the present embodiment and reference embodiments are used in cutting a fiber reinforced composite material and/or a metal.

The first reference embodiment is a cutting method for cutting the fiber reinforced composite material (for example, carbon fiber reinforced plastics) using an entry sheet.

In the first reference embodiment, the fiber reinforced composite material that is a material to which cutting is performed is a material whose properties are enhanced by integrally combining two different raw materials, and is not particularly limited as long as it is a material having the constitution in which a matrix resin and reinforced fiber are combined.

The kind and form of the reinforced fiber used for the fiber reinforced composite material are not particularly limited. For example, glass fiber, carbon fiber, aramid fiber, and so on are preferable as the kind of the reinforced fiber. Among them, the carbon fiber reinforced plastics in which carbon fiber is used as the reinforced fiber are particularly preferable. The form of the reinforced fiber is not particularly limited, however examples thereof include a filament, a tow, cloth, a blade, a chop, milled fiber, a felt mat, paper, a prepreg, and so on.

As the matrix resin used for the fiber reinforced composite material, the resin component is not particularly limited. Specifically, thermosetting resins such as epoxy resins, phenol resins, cyanate resins, vinyl ester resins, and unsaturated polyester resins and thermoplastic resins such as ABS (acrylonitrile-butadiene-styrene) resins, PA (polyamide) resins, PP (polypropylene) resins, PC (polycarbonate) resins, methyl methacrylate resins, and polyethylene, acrylic and polyester resins are preferable. Furthermore, an inorganic filler, an organic filler, or the like may appropriately be blended in the matrix resin of the fiber reinforced composite material. In addition, the composite material in which the thermoplastic resin is used as the matrix resin and the carbon fiber is used as the reinforced fiber in the fiber reinforced composite material is sometimes referred to as carbon fiber reinforced thermoplastics (CFRTP, Carbon Fiber Reinforced Thermoplastics) in order to distinguish from the composite material in which a resin other than the thermoplastic resin is used, but is included in carbon fiber reinforced plastics (CFRP) in the embodiments.

It is preferable that the entry sheet of the first reference embodiment contains a resin sheet.

In the entry sheet of the first reference embodiment, the component that forms the resin sheet may be a water soluble resin or a water insoluble resin, and is not particularly limited.

In the case where the water soluble resin is used as the component that forms the resin sheet, the water soluble resin is not particularly limited as long as it is a polymer compound that dissolves 1 g or more relative to 100 g of water at 25°C and 1 atm. In the case where the water soluble resin is used as the component that forms the resin sheet, the performance of discharging cutting chips during cutting is improved due to lubricity of the water soluble resin, furthermore there is an effect of reducing the load to the cutting tool because the surface hardness of the resin sheet becomes moderately soft, and moreover it is possible to easily remove the resin component adhered to the processed holes after cutting. Specific examples of the water soluble resin include, but not particularly limited to, for example, polyethylene oxides, polyethylene glycols, polypropylene oxides, water soluble urethanes, polyether-based water soluble resins, water soluble polyesters, sodium polyacrylates, polyacrylamides, polyvinylpyrrolidones, polyvinyl alcohols, esters of polyalkylene glycols, ethers of polyalkylene glycols, polyglycerin monostearates, polyoxyethylene/propylene copolymers, and derivatives thereof, and at least one of these can be selected. Among these, the water soluble resins are more preferably polyethylene oxides, polyethylene glycols, and polyether-based water soluble resins.

In the case where the water insoluble resin is used as the component that forms the resin sheet, the kind of the water insoluble resin is not particularly limited. In the case where the water insoluble resin is used as the component that forms the resin sheet, the surface hardness of the resin sheet is higher than in the case where the water soluble resin is used, and therefore, for example, the biting property of the drill during drilling is improved, making it possible to bore a hole at a position as designed, and furthermore the rigidity of the resin sheet is improved and the handling property is improved. Examples of the resin sheet-forming component include, but not particularly limited to, urethane-based polymers, acrylic-based polymers, vinyl acetate-based polymers, vinyl-chloride-based polymers, polyester-based polymers, copolymers thereof, epoxy resins, phenol resins, cyanate resins, melamine resins, urea resins, thermosetting polyimides, and so on.

On the other hand, examples of the lubricity-improving component among components that form the resin sheet include, but not particularly limited to, amide-based compounds such as modified polyamides, ethylene bis-stearamide, oleic acid amide, stearic acid amide, and methylene bis-stearamide; fatty acid-based compounds such as lauric acid, stearic acid, palmitic acid, and oleic acid; fatty acid ester-based compounds such as butyl stearate, butyl oleate, and glycol laurate; aliphatic hydrocarbon-based compounds such as liquid paraffin and polyethylene wax; higher aliphatic alcohols such as oleyl alcohol; and polystyrene-based resins such as styrene homopolymers (GPPS), styrene-butadiene copolymers (HIPS), and styrene-(meth)acrylic acid copolymers (for example, MS resins), and at least one of these can be selected.

With respect to the component that forms the resin sheet, cellulose derivatives may be used as the water soluble resin. Examples of the cellulose derivative include, but not particularly limited to, hydroxyethyl cellulose and carboxymethyl cellulose. Hydroxyethyl cellulose is a compound in which at least part of hydrogen atoms in hydroxy groups contained in cellulose {H-(C₆H₁₀O₅)ₙ-OH} is substituted by [-(CH₂-CH₂-O)ₘ-H], and has a solubility to water of at least 0.05 g/L at 25°C and 1 atm (where n and m are an integer of 1 or more). The cellulose derivative can be obtained by, for example, adding an ethylene oxide to cellulose.

On the other hand, carboxymethyl cellulose is a compound in which at least part of hydrogen atoms in hydroxy groups contained in cellulose {H-(C₆H₁₀O₅)ₙ-OH} is substituted by a carboxymethyl group [-CH₂-COOH], and has a solubility to water of at least 0.05 g/L at 25°C and 1 atm (where n is an integer of 1 or more). Moreover, part of carboxy groups in the carboxymethyl group may be a sodium salt. The cellulose derivative can be obtained by, for example, adding chloroacetic acid to cellulose. In addition, the "cellulose" in the reference embodiment means a polymer compound in which a large number of β-glucoses are bonded through a glycosidic bond and in which hydroxy groups bonded to a carbon atom at 2-position, 3-position, and 6-position in the glucose ring of cellulose are unsubstituted. Moreover, the "hydroxy groups contained in cellulose" denote hydroxy groups that are bonded to a carbon atom of 2-position, 3-position, and 6-position.

An additive can be blended as necessary in the resin sheet used in the first reference embodiment. Examples of the kind of the additive include, but not particularly limited to, a surface adjusting agent, a leveling agent, an antistatic agent, an emulsifying agent, an antifoaming agent, a wax additive, a coupling agent, a rheology control agent, an antiseptic agent, an antifungal agent, an antioxidant, a light stabilizer, a nucleating agent, an organic filler, an inorganic filler, a solid lubricant, a plasticizer, a softening agent, a heat stabilizer, a coloring agent, and so on.

In the first reference embodiment, examples of the method for forming the resin sheet include, but not particularly limited to, a production method in which the above-mentioned components that form the resin sheet are appropriately melted, applied on a support, cooled, and solidified, or applied on a support in a liquid form obtained by dissolving or dispersing the components in a solvent, dried, cooled, and solidified to form a resin sheet, and thereafter the support is removed or released to produce as the resin sheet.

The method for applying the resin sheet-forming components in a liquid form on a support is not particularly limited as long as it is a publicly known method that is industrially used. Specific examples include a method in which the resin sheet-forming components are appropriately heated and melted to be mixed using a roll, a kneader, or another kneading method, and then a resin sheet is formed on a release film by a roll method, a curtain coating method, or the like and a method in which a resin sheet having a desired thickness is formed in advance from the resin sheet-forming components using a roll or T-die extruder, or the like.

In the first reference embodiment, it is preferable that the resin sheet has a plurality of layers containing two or more resin composition layers. Specifically, the object of the present invention can be achieved more effectively and surely by appropriately combining each of the plurality of layers such as a layer made of a resin composition that exhibits a high lubricating effect, a layer made of a resin composition that improves positional accuracy, and a layer having a high rigidity and made of a resin composition that contains a water insoluble resin, or the like, and therefore such combination is more preferable. Moreover, it is more preferable in that the handling property of the entry sheet of the first reference embodiment is improved by providing the layer having a high rigidity and made of the resin composition containing a water insoluble resin or the like.

Examples of the method for forming the resin sheet so as to have a plurality of layers in the first reference embodiment include, but not particularly limited to, a method in which, on at least one face of a layer prepared in advance, the other layer is directly formed, a method in which a layer prepared in advance and the other layer are stuck together with an adhesive resin or by a heat lamination method or the like, and other methods.

It is preferable that the entry sheet of the first reference embodiment contains a metal, and it is more preferable that the metal is a metal foil.

In the case where the entry sheet of the first reference embodiment contains a resin sheet and a metal foil, it is preferable that the entry sheet has a metal foil on at least one face of the resin sheet.

In the case where the entry sheet of the first reference embodiment contains a plurality of layers each having a metal foil on at least one face of the resin sheet as described above, the rigidity is enhanced and the handling property is improved. Further, in the case where drilling is performed for example, the straight advancing property of a drill is maintained by the metal foil to improve the centripetal property of the drill, thereby making it possible to bore a hole at a position as designed. Furthermore, the metal foil exists between the workpiece and the resin sheet, thereby playing a roll of preventing the resin sheet-forming components that are thermally melted from fixing on the upper portion and inside of the processed holes.

The thickness of the metal foil used in the first reference embodiment is preferably 0.05 to 0.5 mm, more preferably 0.05 to 0.3 mm. When the thickness of the metal foil is 0.05 mm or more, the handling property during production or boring tends to be improved. On the other hand, when the thickness of the metal foil is 0.5 mm or less, it becomes easy to discharge cutting chips generated during cutting.

Moreover, aluminum is preferable as the metal kind of the metal foil, and aluminum having a purity of 95% or more is preferable as the material quality of aluminum foil. Specific examples of the material quality include, but not particularly limited to, 5052, 3004, 3003, 1N30, 1N99, 1050, 1070, 1085, 1100, 8021, and so on specified in JIS-H4160. In the case where drilling is performed for example, the breakage or local wear of the drill caused by impurities contained in the aluminum foil can be reduced by using high-purity aluminum foil as the metal foil, thereby making it possible to reduce cutting load to the drill.

In the case where the entry sheet of the first reference embodiment contains a resin sheet and a metal foil, it is preferable that an adhesive layer is formed between the metal foil and the resin sheet. It is more preferable that the adhesive layer is a resin coating.

In the first reference embodiment, examples of the method for forming a plurality of layers containing a resin sheet and a metal foil include, but not particularly limited to, a method in which a resin sheet is directly formed on at least one face of a metal foil, a method in which a resin sheet prepared and a metal foil each prepared in advance are stuck together by a lamination method or the like, and other methods. Examples of the method also include a method in which, in forming the plurality of layers, the resin sheet and the metal foil are laminated and integrated by using, as a support, the metal foil in which an adhesive layer is formed in advance.

With respect to the metal foil in which an adhesive layer is formed in advance for the purpose of laminating and integrating the resin sheet and the metal foil, it is preferable to use a metal foil in which a resin coating having a thickness of 0.001 to 0.5 mm is formed from the standpoint of improving the adhesiveness between the metal foil and the resin sheet. The resin used for the resin coating is not particularly limited and may be any of thermoplastic resins and thermosetting resins, and the thermoplastic resin and the thermosetting resin may be used together. Examples of the thermoplastic resin include, but not particularly limited to, urethane-based polymers, acrylic-based polymers, vinyl acetate-based polymers, vinyl chloride-based polymers, polyester-based polymers, and copolymers thereof. Examples of the thermosetting resin include, but not particularly limited to, resins such as phenol resins, epoxy resins, melamine resins, urea resins, unsaturated polyester resins, alkyd resins, polyurethanes, thermosetting polyimides, and cyanate resins. Suitable resins include epoxy resins and polyester-based resins. Moreover, the metal foil obtained by coating a commercially available metal foil in advance with a resin coating by a publicly known method may be used as the metal foil used in the first reference embodiment.

In the entry sheet of the first reference embodiment, it is preferable to form a layer (sticky layer) having stickiness on the surface of the resin sheet or metal foil that contacts the workpiece (for example, the CFRP) for the purpose of allowing the entry sheet of the first reference embodiment and the workpiece (for example, the CFRP) to contact each other. The component of the sticky layer is not particularly limited and may be any of thermoplastic resins and thermosetting resins, and the thermoplastic resin and the thermosetting resin may be used together. Examples of the thermoplastic resin include, but not particularly limited to, urethane-based polymers, acrylic-based polymers, vinyl acetate-based polymers, vinyl chloride-based polymers, polyester-based polymers, and copolymers thereof. Examples of the thermosetting resin include, but not particularly limited to, resins such as phenol resins, epoxy resins, melamine resins, urea resins, unsaturated polyester resins, alkyd resins, polyurethanes, thermosetting polyimides, and cyanate resins. Among these, acrylic-based sticky agents are more preferable because the property by which sticking is possible easily at normal temperature without glue residue to the workpiece (for example, the CFRP) is required. Furthermore, among acrylic-based sticky agents, solvent type acryl sticky agents and acrylic emulsion type sticky agents (water-based) are suitably used. The acrylic-based sticky agent is a composition containing a poly(meth)acrylic acid ester and a tackifier as main components. Furthermore, a degradation prevention agent such as an antioxidant and an inorganic filler such as calcium carbonate, talc, and silica can be added as necessary to the component of the sticky layer.

The method for forming the sticky layer on the surface of the entry sheet is not particularly limited as long as it is a publicly known method that is industrially used. Specific examples thereof include a method in which a sticky layer is formed by a roll method, a curtain coating method, a spray jetting method, or the like, a method in which a sticky layer having a desired thickness is formed in advance using a roll or T-die extruder, or the like, and other methods. The thickness of the sticky layer is not particularly limited, and the optimum thickness can appropriately be selected considering the curvature of the workpiece (for example, the CFRP) and the constitution of the resin sheet and entry sheet.

When the entry sheet of the first reference embodiment is used, it is not always the case that the workpiece (for example, the CFRP) is plane, and it sometimes occurs that the workpiece has a curved surface. Therefore, curved-surface conformability is sometimes required for the entry sheet of the first reference embodiment. In the entry sheet of the first reference embodiment, it is preferable, for example, to blend a plasticizer or a softening agent in the resin composition that forms a resin sheet for the purpose of imparting curved-surface conformability. As the specific examples of the plasticizer and the softening agent, phthalic acid esters, adipic acid esters, trimellitic acid esters, polyesters, phosphoric acid esters, citric acid esters, epoxidized vegetable oils, sebacic acid esters, and so on are preferable. When the entry sheet is arranged on the curved surface of the workpiece (for example, the CFRP), for example, the stress or strain to the resin sheet is reduced by blending the plasticizer or the softening agent, thereby making it possible to suppress cracks in the resin sheet.

The entry sheet of the first reference embodiment is used, for example, in cutting such as boring, machining, and severing of the CFRP, and the tool and method for cutting are not particularly limited. Specific examples include boring in which through holes or non-through holes are formed with a drill, a router, a milling cutter, an end mill, a side cutter, or the like and severing of the CFRP with a router, a pipe cutter, an end mill, a metal saw, or the like. Moreover, there occurs no problem when a coating film such as a titanium, a diamond, or a diamond-like carbon coating film is formed on a cutting edge of a cutting tool for the purpose of enhancing the hardness to suppress wear.

In the first reference embodiment, the fiber reinforced composite material (for example, the CFRP) is intended to be the object of cutting, however the object of cutting is not limited to the fiber reinforced composite material (for example, the CFRP). In the first reference embodiment, the entry sheet is also applicable to cutting of a difficult-to-cut metal such as a titanium alloy. Furthermore, it is preferable that the object to be cut is a material in which the metal and the fiber reinforced composite material are overlaid so as to contact each other. In the first reference embodiment, there occurs no problem, for example, when the CFRP and the titanium alloy are bored together in a material in which the CFRP and the titanium alloy are overlaid from the following reason. The optimum boring conditions in the CFRP and the titanium alloy are greatly different. High-speed rotation and low-speed feed rate are suitable for boring the CFRP. On the other hand, with respect to the titanium alloy, in the case where drilling is performed for example, low-speed rotation and high-speed feed rate are suitable because the rise in the temperature of the drill is suppressed and the wear of the drill blade is suppressed. Such a boring condition becomes necessary particularly in a diamond-coated drill that is weak to heat. Facing the contrary boring conditions, boring is performed at an actual processing site in such a way that the boring condition is changed at the border of the CFRP and the titanium alloy or boring is performed taking the mean condition and maintaining the same condition as taken throughout boring. Or, in the case where drilling is performed for example, an effort of collecting dusts by a duct collection apparatus while blowing cold wind during boring of the titanium alloy for air craft use has been made for the purpose of preventing the rise in the temperature of the drill. However, by using the entry sheet of the first reference embodiment, there is a secondary effect of greatly alleviating restrictions in boring conditions of the titanium alloy that easily generates heat due to frictional heat. Further, the CFRP and an aluminum alloy, limited to the titanium alloy, can be bored together in a material obtained by overlaying the CFRP and the aluminum alloy. Furthermore, the entry sheet of the first reference embodiment may be used for cutting such as boring, machining, and severing of the titanium alloy or aluminum alloy alone.

The present inventors considers that, by using the entry sheet containing a resin sheet in cutting the fiber reinforced composite material and/or the metal, when drilling is performed for example, the lubricity between the drill surface including the drill groove surface and the inside of the processed hole is enhanced, the discharge of carbon fiber or difficult-to-cut particles in a difficult-to-cut metal to be cut by the drill blade is made easy, and the frequency and degree of rubbing with the drill blade are reduced, and therefore the wear of the drill blade is reduced. In the case where drilling is performed for example, the abrasive wear occurs when the difficult-to-cut particles and the drill blade are rubbed, and therefore reducing the abrasive wear leads to reduction in the wear of the drill blade. In addition, this action principle is applicable to cutting tools in general. Therefore, the entry sheet of the first reference embodiment exhibits a remarkable effect particularly in cutting of the high-strength CFRP for air craft use or the like. The reason is because the carbon fiber in the CFRP densely exist, for example, in drilling of the CFRP for air craft use or the like as described previously to greatly increase the amount of the carbon fiber cut and therefore the drill blade is liable to be worn. Accordingly, the entry sheet of the first reference embodiment that contributes to reduction in wear of the drill blade becomes an effective solution that has never been obtained so far in drilling of the CFRP for air craft use or the like. Furthermore, in the case of drilling of a UD material, the drill blade enters the carbon fiber bundle at both angles of 45° and 225° in such a way that the drill blade bites into and scoop out the carbon fiber bundle, and therefore a fiber-buckling portion is liable to occur in the inner wall of a hole around 45° and 225°. In the case where the entry sheet of the first reference embodiment contains a lubricity-improving agent, the entry sheet is excellent in lubricity to suppress buckling of fiber and further suppress the rise in temperature due to frictional heat, and therefore it becomes hard for the matrix resin to reach the glass transition point (temperature) or the softening point and the state where the carbon fiber is tightly bundled can be maintained, thereby suppressing the buckling of fiber. Thus, the entry sheet of the first reference embodiment exhibits a marked effect also in the case of cutting of the UD material.

In the case where the resin sheet is contained in the entry sheet of the first reference embodiment, the thickness of the resin sheet is appropriately selected considering, for example, the severing and cutting method, area, and volume in cutting of the CFRP, the drill diameter used in boring, the constitution and thickness of the CFRP, and others. It is preferable that the thickness of the resin sheet is in a range from 0.1 to 20 mm, more preferably in a range from 0.2 to 10 mm, further preferably in a range from 0.5 to 5 mm. When the thickness of the resin sheet is 0.1 mm or more, a sufficient reduction in cutting stress is obtained, and in the case where drilling is performed for example, the load to the drill becomes small, making it possible to suppress the breakage of the drill. On the other hand, when the thickness of the resin sheet becomes 20 mm or less, winding of the resin sheet on the drill is reduced in the case where drilling is performed for example, making it possible to suppress the occurrence of cracks in the resin sheet. Particularly in the case where the amount of resin is appropriate, it can be suppressed for the resin to become a binder for cut powder and it can also be suppressed for the cut powder to remain in the processed hole, and therefore it can be suppressed for the unevenness inside the hole to expand. That is to say, the lubricity can be improved by appropriately adjusting the composition and thickness of the resin sheet, and in the case where drilling is performed for example, the discharge of cut powder through the drill groove can be optimized. Moreover, it is preferable to appropriately control the total thickness of the resin sheet for the purpose of obtaining the effect of the present invention more, and it is also possible to use thin resin sheets in such a way that a plurality of thin resin sheets are overlaid.

The thickness of each layer such as the resin sheet layer, the metal foil, the adhesive layer, or the sticky layer that constitutes the entry sheet of the first reference embodiment is measured in the following manner. First of all, the entry sheet is sectioned in a direction perpendicular to the entry sheet using a cross-section polisher (CROSS-SECTION POLISHER SM-09010 manufactured by JEOL Ltd. DATUM) or an ultramicrotome (EM UC7 manufactured by Leica Microsystems Co., Ltd.). Next, the cut section is observed from a direction perpendicular to the cut section using a SEM (Scanning Electron Microscope, VE-7800 manufactured by KEYENCE CORPORATION) to measure the thickness of each layer that constitutes the entry sheet. In measuring the thickness, the thickness at 5 points per 1 visual field is measured, and the average value is defined as the thickness of each layer.

With respect to drilling using the entry sheet of the first reference embodiment, it is preferable to perform drilling of the CFRP from the face of the resin sheet in the entry sheet arranging the resin sheet in the entry sheet on the uppermost face of the CFRP to which drilling is to be performed so that the resin sheet becomes a drill-entering face.

The second reference embodiment is used in cutting a metal. It is preferable that the entry sheet of the second reference embodiment contains a resin sheet.

The metal as the object of cutting for which the entry sheet of the second reference embodiment can be used is not particularly limited as long as it is a metal that is generally used as a structure material, however examples of such a metal include, but not particularly limited, metal materials used as a material for the machine body structure of air crafts. Among them, high strength metals such as aluminum alloys, magnesium alloys, titanium alloys, low alloy steel, stainless steel, and heat resistant alloys are preferable as the metal that is the object of cutting using the entry sheet of the second reference embodiment. The reason is because the effect of prolonging the lifetime of cutting tools becomes more remarkable as the metal has higher strength. The metal as the object of cutting may be used alone or in combination of two or more. Moreover, among the above-described metals, the titanium alloy is particularly preferable as the metal that is the object of cutting. The reason is because although the titanium alloy has a tensile strength 2 times as strong as the aluminum alloy and is a material excellent in corrosion resistance and heat resistance, the titanium alloy is a difficult-to-cut material with a high hardness, and therefore it is necessary to make the cutting conditions or the shapes of cutting tools special in the conventional technologies, however when the entry sheet of the second reference embodiment is used, it becomes unnecessary to make the cutting conditions or the shapes of cutting tools special and the lifetime of cutting tools can be made long. In addition, the metal as the object of cutting may contain a different kind of constructive material such as a fiber reinforced composite material in the reference embodiment.

Examples of the cutting method in which the entry sheet of the second reference embodiment can be used include, but not particularly limited to, boring for forming a through hole or a non-through hole, machining, severing, and so on. Moreover, examples of the kind of cutting tools that can be used in cutting include, but not particularly limited to, a drill, a router, a milling cutter, an end mill, a side cutter, and so on. Furthermore, these cutting tools may be a cutting tool having a general material quality, or a special cutting tool in which a coating film such as a titanium, diamond, or diamond-like carbon coating film is formed on the edge of the blade of the cutting tool for the purpose of enhancing the hardness and suppressing the wear. The reason is because, in any of processing using a cutting tool having a general material quality and processing using a special cutting tool in which a coating film such as a titanium, diamond, or diamond-like carbon coating film is formed on the edge of the blade of the cutting tool, the entry sheet of the embodiment can prolong the processing lifetime of the cutting tool. Particularly in the processing using a special cutting tool in which a coating film such as a titanium, diamond, or diamond-like carbon coating film is formed on the edge of the blade of the cutting tool, the effect of prolonging the processing lifetime is remarkable, and therefore it is suitable to use the entry sheet of the reference embodiment for the processing using such a tool.

The drill used for boring in which the entry sheet of the second reference embodiment can be used is not particularly limited with respect to the diameter, material quality, and shape of the drill and whether the surface coating exists or not as long as it is a drill that is generally used. For example, it is preferable that the drill diameter is 1 mmφ or more and 10 mmφ or less. The diameter of 2 mmφ or more and 7 mmφ or less, which is often used in boring of base materials for air craft use, is more preferable. Moreover, it is preferable that the material quality of the drill is a cemented carbide produced by sintering a hard metal carbide powder. Examples of such a cemented carbide include, but not particularly limited to, a metal obtained by mixing and sintering tungsten carbide and cobalt as a binder. Titanium carbide, tantalum carbide, or the like is sometimes added to such a cemented carbide for the purpose of further improving material properties according to the intended use. On the other hand, the shape of the drill can appropriately be selected considering boring conditions, the kind and shape of the workpiece, and so on. The shape of the drill is not particularly limited, and the factors to determine the shape of the drill include the tip angle of the drill, the twist angle of the groove, the number of cutting edges, and so on. The surface coating of the drill can appropriately be selected considering boring conditions, the kind and shape of the workpiece, and so on. Preferable kinds of surface coating include diamond coating, diamond-like coating, ceramics coating, and so on.

Hereinafter, the entry sheet of the second reference embodiment will be explained in detail. Examples of the method for producing the entry sheet of the second reference embodiment include, but not particularly limited to, a method for producing an entry sheet containing a resin sheet in which a resin composition is appropriately melted to change into a liquid form, then the resin composition is applied on a support, cooled, and solidified to form a resin composition layer (resin sheet), and thereafter the support is removed or released. Moreover, the examples also include a method for producing an entry sheet containing a resin sheet in which a resin composition is dissolved or dispersed in a solvent to change into a liquid form, then the resin composition is applied on a support, dried, cooled, and solidified to form a resin composition layer, and thereafter the support is removed or released. In producing the entry sheet, the support is not particularly limited, and, for example, a metal foil or film, a metal roll, and so on can appropriately be used. The method for forming the resin composition layer in a liquid form on a support is not particularly limited as long as it is a publicly known method that is industrially used. Examples thereof include a method in which a resin composition is appropriately heated and melted to be mixed using a roll, a kneader, or another kneading method, and then a resin composition layer (resin sheet) is formed on a support by a roll method, a curtain coating method, or the like. Moreover, the examples also include a method in which a resin composition layer (resin sheet) is formed on a support by a coating method or the like applying the resin composition dissolved or dispersed in a solvent using a bar coater, a gravure roll, a die, or the like. On the other hand, other than the above-described methods for forming a resin composition layer (resin sheet) on a support, a method or the like in which a resin composition is appropriately heated and melted to be mixed using a roll, a kneader, or another kneading method, and a resin composition layer having a desired thickness is formed as a resin sheet using a roll, a T-die extruder or the like without using a support can also be used.

As the component of the resin composition that forms the resin sheet, water soluble resins and water insoluble resins are generally used, and also in the case where the entry sheet of the second reference embodiment contains a resin sheet, water soluble resins and water insoluble resins can be used as the component of the resin composition that forms the resin sheet. These resins have a role of improving the lubricity during processing as the lubricity-improving component or have a role of improving the processability as the resin sheet-forming component. Among these resins, water soluble resins have an effect of improving discharge property of cut chips during cutting due to the lubricity of the resins. Moreover, the resin sheet containing a water soluble resin as the component of the resin composition has a moderately soft surface hardness and therefore also has an effect of reducing the load of processing of cutting tools. Furthermore, it is possible to easily remove, after cutting, the resin component adhered to the processed hole. On the other hand, the resin sheet using a water insoluble resin as the component of the resin composition has a higher surface hardness than the resin sheet using a water soluble resin and therefore, in the case where drilling is performed for example, has a characteristic that the biting property of the drill is favorable and the holes can be bored at a position as designed. Moreover, the resin sheet has a high rigidity and therefore is excellent in the handling property.

In the entry sheet of the second reference embodiment, a category of preferable water soluble resins as the component of the resin composition in the resin sheet is a polymer compound that dissolves 1 g or more relative to 100g of water at 25°C and 1 atm. Examples of such a water soluble resin include, but not particularly limited to, polyethylene oxides, polyethylene glycols, polypropylene oxides, water soluble urethanes, polyether-based water soluble resins, water soluble polyesters, sodium polyacrylates, polyacrylamides, polyvinyl pyrrolidones, polyvinyl alcohols, polyalkylene glycols, esters of polyalkylene glycols, ethers of polyalkylene glycols, polyglycerin monostearates, polyoxyethylene/propylene copolymers, and derivatives thereof, and at least one or more of these can be selected and used. Among these, polyethylene oxides, polyethylene glycols, and polyether-based water soluble resins are more preferable as the component of the resin composition.

In the entry sheet of the second reference embodiment, another category of preferable water soluble resins as the component of the resin composition that forms the resin sheet is a cellulose derivative. In addition, the "cellulose" in the second reference embodiment means a polymer compound in which a large number of β-glucoses are bonded through a glycosidic bond and in which hydroxy groups bonded to a carbon atom at 2-position, 3-position, and 6-position in the glucose ring of cellulose are unsubstituted. Moreover, the "hydroxy groups contained in cellulose" denote hydroxy groups that are bonded to a carbon atom of 2-position, 3-position, and 6-position in the glucose ring of cellulose. Examples of the cellulose derivative include hydroxyethyl cellulose and carboxymethyl cellulose. Hydroxyethyl cellulose, in general, is a compound in which at least part of hydrogen atoms in hydroxy groups contained in cellulose {H-(C₆H₁₀O₅)ₙ-OH} is substituted by [-(CH₂-CH₂-O)ₘ-H] (where, n and m are integers of 1 or more), and has a solubility to water of at least 0.05 g/L at 25°C and 1 atm. The hydroxyethyl cellulose is synthesized by, for example, adding an ethylene oxide to cellulose.

On the other hand, carboxymethyl cellulose is a compound in which at least part of hydrogen atoms in hydroxy groups contained in cellulose {H-(C₆H₁₀O₅)ₙ-OH} is substituted by a carboxymethyl group [-CH₂-COOH] (where n is an integer of 1 or more), and has a solubility to water of at least 0.05 g/L at 25°C and 1 atm. Moreover, part of carboxy groups in the carboxymethyl group may be a sodium salt. Carboxymethyl cellulose can be obtained by, for example, adding chloroacetic acid to cellulose.

In the case where the resin sheet is contained in the entry sheet of the second reference embodiment, the water insoluble resin that can be used as the component of the resin composition that forms the resin sheet is not particularly limited. In the second reference embodiment, the water insoluble resin is used as the resin sheet-forming component, lubricity-improving component, or the like. Examples of the preferable water insoluble resin that is used as the resin sheet-forming component include, but not particularly limited to, urethane-based resins, acrylic-based resins, vinyl acetate-based resins, vinyl chloride-based resins, polyester-based resins, copolymers thereof, phenol resins, epoxy resins, melamine resins, urea resins, unsaturated polyester resins, alkyd resins, polyurethanes, thermosetting polyimides, cyanate resins, epoxy resins, and polyester-based resins. Moreover, at least one of these can be selected and used as the resin sheet-forming component. On the other hand, examples of the preferable water insoluble resin that is used as the lubricity-improving component include, but not particularly limited to, amide-based compounds such as modified polyamides, ethylene bis-stearamide, oleic acid amide, stearic acid amide, and methylene bis-stearamide; fatty acid-based compounds such as lauric acid, stearic acid, palmitic acid, and oleic acid; fatty acid ester-based compounds such as butyl stearate, butyl oleate, and glycol laurate; aliphatic hydrocarbon-based compounds such as liquid paraffin and polyethylene wax; higher aliphatic alcohols such as oleyl alcohol; and polystyrene-based resins such as styrene homopolymers (GPPS), styrene-butadiene copolymers (HIPS), and styrene-(meth)acrylic acid copolymers (for example, MS resins). At least one of these can be selected and used as the lubricity-improving component. Furthermore, in the entry sheet of the second reference embodiment, the resin sheet-forming component and the lubricity-improving component can be used together.

In the case where the resin sheet is contained in the entry sheet of the second reference embodiment, the thickness of the resin sheet is appropriately selected considering the kind and thickness of the metal to be an object of cutting, the kind of cutting tools used for cutting, the cutting method, the drill diameter used in boring, and others. The thickness of the resin sheet is preferably in a range from 0.1 to 20 mm, more preferably in a range from 0.2 to 10 mm, further preferably in a range from 0.5 to 5 mm. When the thickness of the resin sheet is 0.1 mm or more, a sufficient reduction in cutting stress is obtained, and in the case where drilling is performed for example, the load to the drill becomes small, making it possible to suppress the breakage of the drill. On the other hand, when the thickness of the resin sheet becomes 20 mm or less, winding of the resin composition on the drill is reduced in the case where drilling is performed for example, making it possible to suppress the occurrence of cracks in the resin sheet. Particularly in the case where the thickness of the resin sheet is appropriately adjusted in the intended cutting, it can be suppressed for the resin composition to become a binder for cut powder and it can be reduced for the cut powder to remain in the cutting portion, and therefore the rise in the temperature around the cutting portion can be suppressed and welding of the metal as the object of cutting can be suppressed. That is to say, by appropriately adjusting the constitution of the resin sheet, the components of the resin composition, and the thickness of the resin sheet according to the object of cutting and the cutting method, the lubricity and the discharge of the cut powder through a processed groove can be optimized. As described above, it is preferable to appropriately control the total thickness of the resin sheet in the reference embodiment, and it is also possible to use thin resin sheets in such a way that a plurality of thin resin sheets are overlaid.

In the case where the resin sheet is contained in the entry sheet of the second reference embodiment, the resin sheet may have a structure configured of a single resin composition layer or a structure configured of a plurality of resin composition layers, however it is preferable that the resin sheet contains a layered structure in which two or more resin composition layers are laminated from the reasons with regard to properties and improvements in operability. In such an entry sheet of the second reference embodiment, the combination of the resin composition layers is not particularly limited, however it is preferable in terms of a high processing accuracy, a long processing lifetime, and a favorable handling property to appropriately combine: a resin composition layer made of a water soluble resin having a role of improving the lubricity during cutting and a water insoluble resin as a lubricity-improving component; and a resin composition layer made of a water insoluble resin as a resin sheet component having a role of improving the positional accuracy and improving the rigidity.

In the entry sheet of the second reference embodiment, examples of the method for producing the resin sheet that contains a layered structure in which a plurality of resin composition layers are laminated include, but not particularly limited to, a method in which, on at least one face of a resin sheet being prepared in advance and made of a single resin composition layer or a plurality of resin composition layers, a resin composition layer is further formed directly. Examples of the method for forming the resin composition layer on one face of the resin sheet include, but not particularly limited to, a method in which a resin composition is appropriately melted to change into a liquid form, and then the resin composition in a liquid form is applied on the resin sheet as a support, cooled, and solidified to form a resin composition layer. Moreover, the examples also include a method in which a resin composition is dissolved or dispersed in a solvent to change into a liquid form, then the resin composition in a liquid form is applied on the resin sheet as a support, dried, cooled, and solidified to form a resin composition layer. The method for forming the resin composition layer in a liquid form on the resin sheet as a support is not particularly limited as long as it is a publicly known method that is industrially used. Examples thereof include a method in which a resin composition layer is formed by a coating method or the like applying the resin composition dissolved or dispersed in a solvent using a bar coater, a gravure roll, a die, or the like, and a method in which a resin composition is appropriately heated and melted to be mixed using a roll, a kneader, or another kneading method, and then a resin composition layer is formed by a roll method, a curtain coating method, or the like.

As another method for producing a resin sheet that contains a layered structure in which a plurality of resin composition layers are laminated, a method in which a plurality of resin sheets each made of a single resin composition layer or a plurality of resin composition layers are overlaid and stuck together using a resin or by a heat lamination method is also listed. The method of sticking the resin sheets together using a resin or the heat lamination method is not particularly limited as long as it is a publicly known method that is industrially used.

In the case where the resin sheet is contained in the entry sheet of the second reference embodiment, an additive can be blended as necessary in the resin sheet. The kind of the additive is not particularly limited, however, for example, a surface adjusting agent, a leveling agent, an antistatic agent, an emulsifying agent, an antifoaming agent, a wax additive, a coupling agent, a rheology control agent, an antiseptic agent, an antifungal agent, an antioxidant, a light stabilizer, a nucleating agent, an organic filler, an inorganic filler, a solid lubricant, a plasticizer, a softening agent, a heat stabilizer, and a coloring agent can be used.

Among these, the solid lubricant has an effect of improving the lubricity of the entry sheet and prolonging the processing lifetime of cutting tools, and therefore it is preferable that the resin sheet contains a solid lubricant in the entry sheet of the second reference embodiment. The kind of solid lubricant is not particularly limited as long as it is a solid having lubricity. For example, graphite, molybdenum disulfide, tungsten disulfide, molybdenum compounds, polytetrafluoroethylenes, polyimides, and so on are preferable. Among these, graphite is preferable because graphite has a moderate hardness, and natural graphite, artificial graphite, activated carbon, acetylene black, carbon black, colloidal graphite, pyrolytic graphite, expanded graphite, and scaly graphite can suitably be used. Among these, scaly graphite is particularly preferable because the reduction of wear can be improved more effectively due to the shape and particle diameter. These graphites may be used alone or in combination of two or more.

In the entry sheet of the second reference embodiment, the effect of using the solid lubricant and the resin composition in combination can be explained as follows. In drilling for example, the resin composition and the solid lubricant exhibit lubricity by adhering to the surface and groove of the drill and the side face of the processed holes of the workpiece. When the solid lubricant is adhered thereto, the change in volume and hardness associated with the temperature change is smaller in the solid lubricant as compared with the resin composition, and therefore, in the case where drilling is performed for example, the constant volume and hardness can be maintained with the solid lubricant even when the temperature of the drill and processed portion rises. That is to say, in the case where drilling is performed for example, the solid lubricant constantly exists between the drill and the workpiece to enhance the lubricity and can exhibit the effect similar to the effect exhibited by a bearing, and therefore the solid lubricant has an effect of suppressing the wear of the drill.

The reason why graphite is preferable among the solid lubricants that can be used for the entry sheet of the second reference embodiment is mentioned. When the solid lubricant has a small hardness, the solid lubricant has a poor bearing effect and it sometimes occurs that the lubricity is lowered. On the other hand, when the solid lubricant has a large hardness, there is a possibility that the problem of acceleration in the wear of the drill tip or breakage of the drill tip occurs in the case where drilling is performed for example. Therefore, graphite having a moderate hardness is preferable as the solid lubricant.

With respect to the amount of the solid lubricant used, it is preferable to use 5 parts by weight to 200 parts by weight of the solid lubricant in total based on 100 parts by weight of the resin composition, more preferably 10 parts by weight to 100 parts by weight, particularly preferably 20 parts by weight to 100 parts by weight. In the case where the amount of the solid lubricant used is 5 parts by weight or more, the lubricating effect due to the solid lubricant is fully exerted. On the other hand, the amount of the solid lubricant used of 200 parts by weight or less has economic rationality and is advantageous in production.

When the entry sheet of the second reference embodiment is used, the metal as the workpiece is not always plane, and it sometimes occurs that the metal has a curved surface. Therefore, curved-surface conformability (flexibility) is sometimes required for the entry sheet of the second reference embodiment. In the entry sheet of the second reference embodiment, it is preferable, for example, to blend a plasticizer or a softening agent as necessary in the resin composition that forms the resin sheet for the purpose of imparting curved-surface conformability. As the plasticizer and the softening agent, phthalic acid esters, adipic acid esters, trimellitic acid esters, polyesters, phosphoric acid esters, citric acid esters, epoxidized vegetable oils, sebacic acid esters, and so on are preferable. When the entry sheet is arranged on the curved surface of the metal, the stress or strain to the resin sheet is reduced by blending the plasticizer or the softening agent, thereby making it possible to suppress cracks in the resin sheet.

It is preferable that the entry sheet of the second reference embodiment contains a metal, and it is more preferable that the metal is a metal foil.

In the case where the entry sheet of the second reference embodiment contains a resin sheet and a metal foil, it is more preferable that the entry sheet has a metal foil on at least one face of the resin sheet. The reason is because, when the entry sheet having a metal foil on at least one face of the resin sheet is used, the centripetal property of the drill is improved due to the rigidity of the metal foil in the case where drilling is performed for example, thereby making it possible to bore a hole at a position as designed. Moreover, by arranging the metal foil between the metal as the object of cutting and the resin sheet, there is also an effect of preventing the thermally melted resin composition that forms the resin sheet from fixing at the upper portion and inside of the processed holes. Among others, a three-layer structured entry sheet having metal foils on both faces of the resin sheet is particularly preferable because the lubricity of the resin sheet can fully be exerted. When the metal foil is arranged on the outermost layer of the drill-entering face in the case where drilling is performed for example, it can be suppressed for the resin sheet to be scooped out by rotating metal chips that are wound around the drill in cutting the metal. As a result thereof, the lubricity can fully be exerted and the effect of reducing the wear of the drill is improved.

The thickness of the metal foil that can be used in the entry sheet of the second reference embodiment is not particularly limited, however it is preferable that the thickness of the metal foil is 0.05 to 0.5 mm, more preferably 0.05 to 0.3 mm. When the thickness of the metal foil is 0.05 mm or more, the handling property during production of the entry sheet or boring tends to be improved. On the other hand, when the thickness of the metal foil is 0.5 mm or less, it becomes easy to discharge cutting chips generated during cutting.

The kind of the metal foil that can be used in the entry sheet of the second reference embodiment is not particularly limited, however the aluminum foil is preferable. The reason is because, in the case where the aluminum foil is used as the metal foil, the aluminum foil has a moderate softness when compared with the metal as a workpiece, therefore, in the case where drilling is performed for example, there is an effect of suppressing the wobbling of the core of the drill when the rotating drill enters the aluminum foil, and, as a result thereof, a hole the position of which is correct relative to the set coordinates can be bored. Moreover, by suppressing the wobbling of the core of the rotating drill, the moving distance of the drill and the contact area with the workpiece become small, and therefore there is also an effect of reducing the wear of the drill.

The purity of aluminum in the case where the aluminum foil is used as the metal foil is not particularly limited, however it is preferable that aluminum has a purity of 95% or more. The reason is because, in the case where drilling is performed for example, the breakage, local wear, or the like of the drill caused by impurities contained in the aluminum foil can be reduced by using high-purity aluminum foil as the metal foil, thereby making it possible to reduce cutting load to the drill. Examples of such an aluminum foil include, but not particularly limited to, 5052, 3004, 3003, 1N30, 1N99, 1050, 1070, 1085, 1100, 8021, and so on specified in JIS-H4160.

In the second reference embodiment, examples of the method for preparing the entry sheet having a metal foil on at least one face of the resin sheet include, but not particularly limited to, a method in which a single resin composition layer or a plurality of resin composition layers are directly formed on at least one face of the metal foil and a method in which a resin sheet and a metal foil each prepared in advance are stuck together by a heat lamination method or the like. Examples of the method for directly forming the single resin composition layer or the plurality of resin composition layers on at least one face of the metal foil include, but not particularly limited to, a method in which a resin composition is appropriately melted to change into a liquid form, and then the resin composition in a liquid form is applied on the metal foil as a support once or a plurality of times, cooled, and solidified to form a single resin composition layer or a plurality of resin composition layers. Moreover, the examples also include a method in which a resin composition is dissolved or dispersed in a solvent to change into a liquid form, and then the resin composition in a liquid form is applied on the metal foil as a support once or a plurality of times, dried, cooled, and solidified to form a single resin composition layer or a plurality of resin composition layers. The method for forming the resin composition layer in a liquid form on the metal foil as a support is not particularly limited as long as it is a publicly known method that is industrially used. Examples thereof include a method in which a resin composition layer is formed by a coating method or the like applying the resin composition dissolved or dispersed in a solvent using a bar coater, a gravure roll, a die, or the like, and a method in which a resin composition is appropriately heated and melted to be mixed using a roll, a kneader, or another kneading method, and then a resin composition layer is formed by a roll method, a curtain coating method, or the like. On the other hand, the method for sticking the resin sheet and the metal foil together by a heat lamination method is not particularly limited as long as it is a publicly known method that is industrially used.

When the entry sheet of the second reference embodiment is prepared, an adhesive layer may be formed between the metal foil and the resin sheet. In the entry sheet of the second reference embodiment, it is preferable to form the adhesive layer between the metal foil and the resin sheet because adhesiveness between the metal foil and the resin sheet can be made favorable. In addition, a layer of a compound used for making the adhesiveness between the metal foil and the resin sheet favorable is defined as the adhesive layer in the present description. The resin that can be used for the adhesive layer is not particularly limited, and, for example, thermoplastic resins and thermosetting resins can be used. Moreover, the thermoplastic resin and the thermosetting resin may be used together. Preferable thermoplastic resins include urethane-based resins, acrylic-based resins, vinyl acetate-based resins, vinyl chloride-based resins, polyester-based resins, and copolymers thereof. Moreover, preferable thermosetting resins include phenol resins, epoxy resins, melamine resins, urea resins, unsaturated polyester resins, alkyd resins, polyurethanes, thermosetting polyimides, and cyanate resins. Among these, epoxy resins and unsaturated polyester-based resins are more preferable. It is preferable that the thickness of the adhesive layer is 0.001 to 0.5 mm. The reason is because a sufficient adhesive effect is obtained within the range for the purpose of making the adhesiveness between the metal foil and the resin sheet favorable. Moreover, the method for forming the adhesive layer is also not particularly limited as long as it is a publicly known method that is industrially used. Examples thereof include a method in which an adhesive layer is formed by a coating method or the like applying the resin dissolved or dispersed in a solvent using a bar coater, a gravure roll, a die, or the like, and a method in which the resin is appropriately heated and melted to be mixed using a roll, a kneader, or another kneading method, and then an adhesive layer is formed by a roll method, a curtain coating method, or the like. Moreover, there occurs no problem when a commercially available product obtained by coating a metal foil with an adhesive layer is used as the metal foil that is used in the second reference embodiment.

In the cutting method using the entry sheet of the second reference embodiment, examples of the method for closely contacting the entry sheet and the metal as the workpiece with each other include, but not particularly limited to, a method in which the entry sheet and the metal as the workpiece are physically fixed with a clip or a jig and a method of using an entry sheet in which a layer (sticky layer) of a compound having stickiness is formed on the surface of the resin sheet or metal foil that contacts the metal as the workpiece. In addition, a layer of a compound having stickiness, the layer used for fixing the metal as the workpiece and the entry sheet is defined as the sticky layer in the present description. It is preferable to use, among others, an entry sheet in which a sticky layer is formed on the surface of the resin sheet or metal foil that contacts the metal as the workpiece because fixing by a jig or the like is not necessary. Accordingly, it is preferable that the entry sheet of the second reference embodiment is an entry sheet in which a sticky layer is formed on the surface of the resin sheet or metal foil that contacts the metal as the workpiece. The component of the sticky layer is not particularly limited, and, for example, thermoplastic resins and thermosetting resins can be used. Moreover, the thermoplastic resin and the thermosetting resin may be used together. Preferable thermoplastic resins include urethane-based resins, acrylic-based resins, vinyl acetate-based resins, vinyl chloride-based resins, polyester-based resins, and copolymers thereof. Preferable thermosetting resins include phenol resins, epoxy resins, melamine resins, urea resins, unsaturated polyester resins, alkyd resins, polyurethanes, thermosetting polyimides, and cyanate resins. Among these, acrylic-based sticky agents are more preferable because the acrylic-based sticky agents have a property by which sticking is possible easily at normal temperature without glue residue to a metal as the workpiece. Furthermore, among acrylic-based sticky agents, solvent type acryl sticky agents and acrylic emulsion type sticky agents (water-based) are particularly preferable. Here, the acrylic-based sticky agent in the present description denotes a composition containing a poly(meth)acrylic acid ester and a tackifier as main components unless otherwise specifically noted. Furthermore, a degradation prevention agent such as an antioxidant and an inorganic filler such as calcium carbonate, talc, and silica can be added as necessary to the component of the sticky layer.

The method for forming the sticky layer on the surface of the entry sheet is not particularly limited as long as it is a publicly known method that is industrially used. Examples thereof include a method in which a sticky layer is formed by a roll method, a curtain coating method, a spray jetting method, or the like, a method in which a sticky layer is formed using a roll or T-die extruder, or the like, and so on. The thickness of the sticky layer is not particularly limited, and the optimum thickness can appropriately be selected considering the curvature of the metal and the constitution of the resin sheet and entry sheet.

The thickness of each layer such as the resin sheet layer, the metal foil, the adhesive layer, or the sticky layer that constitutes the entry sheet of the second reference embodiment is measured in the following manner. First of all, the entry sheet is sectioned in a direction perpendicular to the entry sheet using a cross-section polisher (CROSS-SECTION POLISHER SM-09010 manufactured by JEOL Ltd. DATUM) or an ultramicrotome (EM UC7 manufactured by Leica Microsystems Co., Ltd.). Next, the cut section is observed from a direction perpendicular to the cut section using a SEM (Scanning Electron Microscope, VE-7800 manufactured by KEYENCE CORPORATION) to measure the thickness of each layer that constitutes the entry sheet. In measuring the thickness, the thickness at 5 points per 1 visual field is measured, and the average value is defined as the thickness of each layer.

The object of cutting to which the entry sheet of the second reference embodiment can be used is not limited to only a metal, but may be a material in which a metal and a fiber reinforced composite material are overlaid so as to contact each other. The entry sheet of the second reference embodiment is also applicable to, for example, boring in which a metal and a fiber reinforced composite material such as the CFRP are bored together in a material in which the metal and the fiber reinforced composite material are overlaid so as to contact each other. The aspect of overlaying is not particularly limited. Specific aspects include a method in which the metal and the fiber reinforced composite material are overlaid with a jig and fixed, a method in which the metal and the fiber reinforced composite material are overlaid through an adhesive layer and fixed, and so on. It is generally known that the optimum boring conditions in, for example, the titanium alloy and the CFRP are greatly different. In the case where drilling is performed for example, low-speed rotation and high-speed feed rate are suitable for boring the titanium alloy because the rise in the temperature of the drill is suppressed and the wear of the drill blade is suppressed. Such a boring condition is required particularly in a diamond-coated drill that is weak to heat. On the other hand, high-speed rotation and low-speed feed rate are suitable for boring the CFRP. Facing such contrary boring conditions, boring is performed at an actual processing site in such a way that the boring condition is changed at the border of the titanium alloy and the CFRP or boring is performed taking the mean condition and maintaining the same condition as taken throughout boring. Moreover, a method in which processing is performed while a cutting oil is poured during drilling of the titanium alloy for air craft use is also adopted for the purpose of preventing the rise in temperature. In such a situation, particularly in the case where a carbon fiber composite material such as the CFRP produced by: laminating one or two or more prepregs obtained by impregnating a matrix resin into carbon fiber; and then conducting heat molding or heat and pressure molding is processed with a drill in which wear is progressed, interlayer peeling is liable to occur between the laminated prepregs because cutting is performed in such a state where the carbon fiber is pressed and cut, and, as a result, there is a drawback that the fluff of the carbon fiber is liable to occur at the exit portion where the drill penetrates. However, by using the entry sheet of the second reference embodiment, the wear of the drill during, for example, cutting of a metal is suppressed for example, and thereby there is an effect of greatly alleviating the restrictions in cutting of the carbon fiber composite material that is liable to have an impact on the quality of processed holes due to the wear of the drill.

In the cutting method using the entry sheet of the second reference embodiment, it is preferable to perform cutting arranging the entry sheet of the second reference embodiment on the cutting tool-entering face during cutting. In the case where the entry sheet containing a resin sheet is used when cutting is performed, it is preferable to perform cutting from the resin sheet face of the entry sheet arranging the entry sheet on the outermost cutting surface so that the resin sheet face of the entry sheet becomes the cutting tool-entering face. Moreover, in boring the metal and the fiber reinforced composite material together, it is preferable to perform cutting from the resin sheet face of the entry sheet arranging the entry sheet on the outermost surface in a state where the metal and the fiber reinforced composite material are overlaid so that the resin sheet face of the entry sheet becomes the cutting tool-entering face. On the other hand, in the case where the entry sheet having a metal foil on at least one face of the resin sheet is used, it is preferable to perform cutting from the outermost surface of the entry sheet arranging the entry sheet so that the face of the metal foil of the entry sheet contacts the cutting surface. Moreover, in boring the metal and the fiber reinforced composite material together, it is preferable to perform cutting from the outermost surface of the entry sheet arranging the entry sheet so that the face of the metal foil of the entry sheet contacts the outermost surface in a state where the metal and the fiber reinforced composite material are overlaid. Furthermore, when cutting of the fiber reinforced composite material and/or the metal is performed, it is particularly preferable to perform cutting while cooling a cutting portion and/or a cutting tool using a gas.

The present inventors consider the effect of using the entry sheet containing a resin sheet, for example, in boring using a drill as follows. The present inventors considers that, by using the entry sheet containing a resin sheet, the lubricity between the drill surface including the drill groove surface and the inside of the processed hole is enhanced, the discharge of difficult-to-cut particles in the difficult-to-cut metal cut by the drill blade is made easy, and the degree of rubbing with the drill blade can be reduced, and therefore, as a result thereof, the wear of the drill blade is reduced. That is to say, the abrasive wear occurs when the difficult-to-cut particles and the drill blade are rubbed, and therefore reducing the abrasive wear leads to reduction in the wear of the drill blade. In addition, this action principle is applicable to cutting tools in general. Therefore, the second reference embodiment exhibits a remarkable effect particularly in cutting of a high-strength metal for air craft use or the like. The reason is because there is a tendency that the metals for air craft use or the like contain a metal having a higher hardness for the purpose of enhancing the strength, and, in cutting of such a metal, the entry sheet of the second reference embodiment that contributes to reduction in wear of cutting tools becomes an effective solution that has never been obtained so far.

The present embodiment is a cutting method for cutting a fiber reinforced composite material which comprises a carbon fiber reinforced plastic and/or a metal which comprises a titanium alloy or an aluminum alloy using the above-mentioned entry sheet.

In the present embodiment, it is preferable to perform cutting while cooling a cutting portion and/or a cutting tool using a gas in cutting a fiber reinforced composite material which comprises a carbon fiber reinforced plastic and/or a metal which comprises a titanium alloy or an aluminum alloy.

In the present embodiment, the metal as the object of cutting is not particularly limited as long as it is a metal that comprises a titanium alloy or an aluminum alloy and is generally used as a structure material. Examples of such a metal include, but not particularly limited to, metal materials used as a material for the machine body structure of air crafts. Among them, high strength metals such as aluminum alloys and titanium alloys are preferable as the metal that is the object of cutting to which the cutting method of the present embodiment is applicable. The reason is because the extent of the rise in temperature due to frictional heat during cutting is larger as the metal has a higher strength, therefore the amount of generated burrs tends to be large, and the cutting method of the present embodiment is effective. The metal that is the object of cutting may be used alone or in combination of two or more. Moreover, among the metals, the titanium alloys are more preferable as the metal that is the object of cutting to which the cutting method of the present embodiment is applicable. Furthermore, among titanium alloys, Ti-6Al-4V made of titanium, aluminum, and vanadium and having a higher strength is particularly preferable. The titanium alloy has a tensile strength 2 times as strong as the aluminum alloy and is a material that is excellent in corrosion resistance and heat resistance, however the titanium alloy has a high hardness and, further, a small thermal conductivity and therefore has a characteristic that the amount of generation of burrs caused by the rise in temperature due to frictional heat is liable to become extremely large. Thus, a large load is applied to cutting tools in boring titanium alloys in the conventional technologies, and therefore it is necessary to improve processing conditions, shapes of the cutting tools, and so on, however, in the cutting method of the present embodiment, cutting can be performed without devising processing conditions and shapes of cutting tools.

The object of cutting to which the cutting method of the present embodiment is applicable is not limited only to a metal which comprises a titanium alloy or an aluminum alloy, but the object of cutting may be a fiber reinforced composite material which comprises a carbon fiber reinforced plastic, a material in which a metal which comprises a titanium alloy or an aluminum alloy and a fiber reinforced composite material which comprises a carbon fiber reinforced plastic are combined, and a material in which a metal which comprises a titanium alloy or an aluminum alloy and a fiber reinforced composite material which comprises a carbon fiber reinforced plastic are overlaid so as to contact each other. The cutting method of the present embodiment is also applicable to, for example, boring in which a metal which comprises a titanium alloy or an aluminum alloy and a carbon fiber composite material such as the CFRP are bored together in a material in which the metal and the fiber reinforced composite material are overlaid so as to contact each other. The aspect of overlaying is not particularly limited. Specific examples include a method in which the metal and the fiber reinforced composite material are overlaid with a jig and fixed, a method in which the metal and the fiber reinforced composite material are overlaid through an adhesive layer and fixed, and other methods. It is generally known that the optimum boring conditions in, for example, the CFRP and the titanium alloy are greatly different. In the case where drilling is performed for example, low-speed rotation and high-speed feed rate are suitable for boring the titanium alloy because the rise in the temperature of the drill is suppressed and the wear of the drill blade is suppressed. Such a boring condition is required particularly in a diamond-coated drill that is weak to heat. On the other hand, high-speed rotation and low-speed feed rate are suitable for boring the CFRP. Facing such contrary boring conditions, boring is performed at an actual processing site in such a way that the boring condition is changed at the border of the titanium alloy and the CFRP or boring is performed taking the mean condition and maintaining the same condition as taken throughout boring. Moreover, a method in which processing is performed while a cutting oil is poured during boring of the titanium alloy for air craft use is also adopted for the purpose of preventing the rise in temperature. In such a situation, particularly in the case where a carbon fiber composite material such as the CFRP produced by: laminating one or two or more prepregs obtained by impregnating a matrix resin into carbon fiber; and then conducting heat molding or heat and pressure molding is processed with a drill in which wear is progressed, interlayer peeling is liable to occur between the laminated prepregs because cutting is performed in such a state where the carbon fiber is pressed and cut, and, as a result, there is a drawback that the fluff of the carbon fiber is liable to occur at the exit portion where the drill penetrates. However, by using the cutting method of the present embodiment, the rise in the temperature of the cutting portion and/or the cutting tool during cutting of a metal is reduced and therefore the amount of burrs derived from the metal is reduced, moreover the wear of the drill is suppressed, and thereby there is an effect of greatly alleviating the restrictions in cutting of the carbon fiber composite material that is liable to have an impact on the quality of processed holes due to the wear of the drill.

In the cutting method of the present embodiment, it is preferable that the object to be cut is a material in which a metal which comprises a titanium alloy or an aluminum alloy and a fiber reinforced composite material which comprises a carbon fiber reinforced plastic are overlaid so as to contact each other and that cutting is performed arranging the fiber reinforced composite material so as to be on the side nearer to the cutting tool-entering side than the metal. In such a case, the effect of the cutting method of the present embodiment is exhibited more remarkably.

Examples of the kind of cutting to which the cutting method of the present embodiment is applicable include, but not particularly limited to, boring for forming a through hole or a non-through hole, machining, severing, and so on. Moreover, examples of the kind of cutting tools that can be used in cutting include, but not particularly limited to, a drill, a router, a milling cutter, an end mill, a side cutter, and so on. Furthermore, these cutting tools may be a cutting tool having a general material quality, or a special cutting tool in which a coating film such as a titanium, diamond, or diamond-like carbon coating film is formed on the edge of the blade of the cutting tool for the purpose of enhancing the hardness and suppressing the wear. The reason is because, in any of processing using a cutting tool having a general material quality and processing using a special cutting tool in which a coating film such as a titanium, diamond, or diamond-like carbon coating film is formed on the edge of the blade of the cutting tool, the cutting method of the present embodiment has an effect of reducing the burrs by a gas-cooled processing in the case where cutting of a fiber reinforced composite material which comprises a carbon fiber reinforced plastic and/or a metal which comprises a titanium alloy or an aluminum alloy is performed while cooling a cutting portion and/or a cutting tool using a gas.

The drill that can be used for boring in which the cutting method of the present embodiment is used is not particularly limited with respect to the diameter, material quality, and shape of the drill and whether the surface coating exists or not as long as it is a drill that is generally used. For example, it is preferable that the drill diameter is 1 mmφ or more and 10 mmφ or less, and the diameter of 2 mmφ or more and 7 mmφ or less, which is often used in boring of base materials for air craft use, is more preferable. Moreover, it is preferable that the material quality of the drill is a cemented carbide produced by sintering a hard metal carbide powder. Examples of such a cemented carbide include, but not particularly limited to, a metal obtained by mixing and sintering tungsten carbide and cobalt as a binder. Titanium carbide, tantalum carbide, or the like is sometimes added to such a cemented carbide for the purpose of further improving material properties according to the intended use. On the other hand, the shape of the drill can appropriately be selected considering boring conditions, the kind and shape of the workpiece, and so on. The shape of the drill is not particularly limited, and the factors to determine the shape of the drill include the tip angle of the drill, the twist angle of the groove, the number of cutting edges, and so on. The surface coating of the drill can appropriately be selected considering boring conditions, the kind and shape of the workpiece, and so on. Preferable kinds of surface coating include, but not particularly limited to, diamond coating, diamond-like coating, ceramics coating, and so on.

In the cutting method of the present embodiment, the case where cutting of a fiber reinforced composite material which comprises a carbon fiber reinforced plastic and/or a metal which comprises a titanium alloy or an aluminum alloy is performed while cooling a cutting portion and/or a cutting tool using a gas will be explained in detail below. For example, a method in which a compressed gas is supplied to the cutting portion and/or the cutting tool and a method in which a gas is supplied to the cutting portion and/or the cutting tool from surroundings by sucking a gas around the cutting portion and/or the cutting tool can be used in the cutting method of the present embodiment. Among them, the method in which a compressed gas is supplied to the cutting portion and/or the cutting tool is simple and suitable.

Moreover, the apparatus for supplying the gas to the cutting portion and/or the cutting tool is also not particularly limited. Examples of the apparatus for supplying a compressed gas to the cutting portion and/or the cutting tool include, as preferable apparatuses, a fan that is an air machine which raise the pressure up to a compression ratio of less than 1.1, a blower that is an air machine which raise the pressure up to a compression ratio of 1.1 or more and less than 2.0, and a compressor that is a compression machine that raise the pressure up to a compression ratio of 2.0 or more. Among them, the compressor is particularly preferable because the compressor can supply a gas having a stable temperature in a stable amount. That is to say, the preferable method for cooling the cutting portion and/or the cutting tool using a gas in the present embodiment is a method for supplying a gas to the cutting portion and/or the cutting tool using the fan, the blower, or the compressor. Among them, the method for supplying a gas to the cutting portion and/or the cutting tool using a compressor is particularly preferable.

The apparatus for sucking a gas around the cutting portion and/or the cutting tool is not particularly limited and can be used for the cutting method of the present embodiment as long as it is a decompression apparatus that is industrially used.

In the cutting method of the present embodiment, a method by which a gas having a predetermined temperature in a predetermined amount of gas can stably be supplied to the cutting portion and/or the cutting tool is preferable as described above, however, in supplying the gas, it is particularly preferable to supply the gas locally to the cutting portion and/or the cutting tool. Examples of such a method include a method for supplying the gas locally to the cutting portion and/or the cutting tool in which a nozzle is installed at a gas outlet of an apparatus for supplying a gas. In this case, the cross-sectional area of the nozzle tip is 7 mm² to 2000 mm², more preferably 20 mm² to 1000 mm², particularly preferably 20 mm² to 600 mm². In the case where the cross-sectional area of the nozzle tip is 7 mm² or more, the amount of the gas that can be supplied is sufficient or an appropriate range can be cooled by the gas, and therefore the cooling effect of the present embodiment can fully be exerted. On the other hand, in the case where the cross-sectional area of the nozzle tip is 2000 mm² or less, the range that can be cooled by the gas does not become too wide, therefore local cooling becomes possible, and the cooling effect of the present embodiment can fully be exerted. In addition, the gas outlet of the apparatus for supplying a gas in the present embodiment includes not only the gas outlet of the apparatus main body but also a gas outlet of piping and hoses extended to around the cutting portion.

In the present embodiment, the distance between the gas outlet of the apparatus for supplying a gas and the cutting portion and/or the cutting tool in supplying the gas to the cutting portion and/or the cutting tool is 100 mm to 500 mm, further preferably 150 mm to 500 mm, particularly preferably 200 mm to 400 mm. When the distance between the gas outlet of the apparatus for supplying a gas and the cutting portion and/or the cutting tool is 100 mm or more, in the case where drilling is performed for example, the risk that the cutting chips generated during drilling contact the gas outlet of the apparatus for supplying a gas can be reduced. On the other hand, when the distance between the gas outlet of the apparatus for supplying a gas and the cutting portion and/or the cutting tool is 500 mm or less, local cooling is made possible and the cooling effect of the present embodiment can fully be exerted.

In the present embodiment, the kind of the gas that is supplied to the cutting portion and/or the cutting tool is not particularly limited, and, for example, air, nitrogen, inert gases, and so on can be used. Among these, air is preferable because it is practical.

In the present embodiment, the temperature of the gas that is supplied to the cutting portion and/or the cutting tool is not particularly limited, however it is preferable that the temperature of the gas is 30°C or lower, more preferably -50 to 30°C, further preferably - 15 to 25°C. In the case where the temperature of the gas is 30°C or lower, the effect of reducing the rise in the temperature of the cutting portion and/or the cutting tool during cutting is exhibited, and the effect of the present embodiment can fully be exerted. On the other hand, when the temperature of the gas is -50°C or higher, it can be suppressed for the dew condensation to occur on the surface of the workpiece or the cutting tool due to an extreme cooling, and it can be suppressed for the workpiece to rust.

In the present embodiment, the amount of the gas is 5 to 300 L/min, more preferably 50 to 250 L/min, further preferably 80 to 200 L/min. In the case where the amount of the gas is 5 L/min or more, the effect of reducing the rise in the temperature of the cutting portion and/or the cutting tool during cutting is exhibited, and the effect of the present embodiment can fully be exerted. On the other hand, when the amount of the gas is 300 L/min or less, the stress against the gas supply is hard to occur, therefore, in the case of drilling for example, lowering of the centripetal property of the drill can be suppressed, and correct drilling becomes easy.

In the present embodiment, the content of the moisture contained in the gas supplied to the cutting portion and/or the cutting tool is not particularly limited, however it is preferable that the content of the moisture is 20 g/m³ or less, further preferably 15 g/m³, particularly preferably 10 g/m³ or less. The lower limit of the amount of the moisture contained in the gas is not particularly limited, however the lower limit is, for example, 0.5 g/m³. When the amount of the moisture contained in the supplied gas is 20 g/m³ or less, the residual amount of the moisture around processed holes of the workpiece can be reduced after cutting, and therefore the rust or degradation of the workpiece can be suppressed to improve the quality of the processed holes.

In the present embodiment, the method for measuring the amount of the moisture contained in the gas supplied to the cutting portion and/or the cutting tool is not particularly limited as long as it is a general measurement method. Specific measurement methods include a method in which the temperature and relative humidity of the gas are determined using a psychrometer and the dew point (amount of moisture) in the gas is measured using a dew point meter, and other methods.

In the present embodiment, the content of the oil contained in the gas supplied to the cutting portion and/or the cutting tool is not particularly limited, however it is preferable that the content of the oil is 10 mg/m³ or less, further preferably 8 mg/m³, particularly preferably 5 mg/m³ or less. When the content of the oil contained in the supplied gas is 10 mg/m³ or less, the residual amount of the oil around the processed hole of the workpiece can be reduced after cutting, and therefore cleaning process becomes unnecessary. Moreover, even in the case where cleaning is not conducted, the erosion of the workpiece due to the oil can be suppressed to improve the quality of processed holes.

In the present embodiment, the method for measuring the content of the oil contained in the gas supplied to the cutting portion and/or the cutting tool is not particularly limited as long as it is a general measurement method. Specific examples include a method in which the number of fine particles of the oil in the gas is measured using a particle counter (fine particle counter), a method in which the measurement is conducted using a detector tube (oil content) for gas quality measurement (602SP, manufactured by Komyo Rikagaku Kogyo K.K.), and other methods.

In the present embodiment, the direction of supplying the gas to the cutting portion of the cutting material and/or the cutting tool is not particularly limited. In the case where drilling is performed for example, the gas may be supplied from the drill-entering face side to the cutting portion and/or the cutting tool, or the gas may be supplied from the drill exit face side to the cutting portion and/or the cutting tool. Moreover, when the cutting portion is at the end portion of the workpiece, the gas may be supplied from the transverse direction of the workpiece. Among them, supplying the gas from the drill-entering face side, which makes it possible to directly cool the cutting portion and/or the cutting tool, is more preferable because surroundings of the cutting portion can effectively be cooled.

As describe above, in the cutting method of the present embodiment, cutting is performed while cooling the cutting portion and/or the cutting tool using a gas. In performing the cutting, cutting is performed using the entry sheet together. The reason is because, not only the effect that the amount of burrs around the cutting portion can be reduced due to gas cooling, but also the effect of reducing the load to the drill to suppress the wear of the drill is obtained by using the entry sheet in the case where drilling is performed for example. Hereinafter, the entry sheet that can suitably be used in the cutting method of the present embodiment will specifically be explained.

The entry sheet that is used in the cutting method of the present embodiment is the above-mentioned entry sheet. The entry sheet contains a resin sheet, and an entry sheet may furthermore contain a metal foil. The reason is because the metal foil has an action of improving the biting property of a tool tip and, in the resin sheet, the resin composition as the constituent component of the resin sheet has an action of improving the lubricity. Among the above-described entry sheets, the entry sheet having a layered structure in which a metal foil and a resin sheet are laminated is more preferable in terms of an improvement in the biting property of a tool tip and an improvement in the lubricity.

In cutting, the entry sheet can be arranged on the cutting tool-entering face and on the cutting tool exit face in the cutting material, however it is more preferable to arrange the entry sheet on the cutting tool-entering face. When cutting is performed, it is preferable to perform cutting from the resin sheet face of the entry sheet arranging the entry sheet on the outermost cutting surface so that the resin sheet face of the entry sheet becomes the cutting tool-entering face. Moreover, in the case where the entry sheet containing a metal foil is used, it is preferable to perform cutting from the metal foil face of the entry sheet arranging the entry sheet on the outermost cutting surface so that the metal foil face of the entry sheet becomes the cutting tool-entering face. Furthermore, in boring the metal and the fiber reinforced composite material together, it is preferable to perform cutting from the resin sheet face of the entry sheet arranging the entry sheet on the outermost surface in a state where the metal and the fiber reinforced composite material are overlaid so that the resin sheet face of the entry sheet becomes the cutting tool-entering face. On the other hand, in the case where the entry sheet having a metal foil on at least one face of the resin sheet is used, it is preferable to perform cutting from the outermost surface of the entry sheet arranging the entry sheet so that the face of the metal foil of the entry sheet contacts the cutting surface. Moreover, in boring the metal and the fiber reinforced composite material together, it is preferable to perform cutting from the outermost surface of the entry sheet arranging the entry sheet so that the face of the metal foil of the entry sheet contacts the outermost surface in a state where the metal and the fiber reinforced composite material are overlaid.

In the cutting method using the entry sheet used in the present embodiment, examples of the method for closely contacting the entry sheet and the workpiece (for example, a metal) with each other include, but not particularly limited to, a method in which the entry sheet and the workpiece (for example, a metal) are physically fixed with a clip or a jig and a method of using an entry sheet in which a layer (sticky layer) of a compound having stickiness is formed on the surface of the resin sheet or metal foil that contacts the workpiece (for example, a metal). In addition, a layer of a compound having stickiness, the layer used for fixing the workpiece (for example, a metal) and the entry sheet is defined as the sticky layer in the present description. It is preferable to use, among others, an entry sheet in which a sticky layer is formed on the surface of the resin sheet or metal foil that contacts the workpiece (for example, a metal) because fixing by a jig or the like is not necessary. Accordingly, it is preferable that the entry sheet used in the present embodiment is an entry sheet in which a sticky layer is formed on the surface of the resin sheet or metal foil that contacts the workpiece (for example, a metal). The component of the sticky layer is not particularly limited, and, for example, thermoplastic resins and thermosetting resins can be used. Moreover, the thermoplastic resin and the thermosetting resin may be used together. Preferable thermoplastic resins include urethane-based resins, acrylic-based resins, vinyl acetate-based resins, vinyl chloride-based resins, polyester-based resins, and copolymers thereof. Preferable thermosetting resins include phenol resins, epoxy resins, melamine resins, urea resins, unsaturated polyester resins, alkyd resins, polyurethanes, thermosetting polyimides, and cyanate resins. Among these, acrylic-based sticky agents are more preferable because the acrylic-based sticky agents have a property by which sticking is possible easily at normal temperature without glue residue to the workpiece (for example, a metal). Furthermore, among acrylic-based sticky agents, solvent type acryl sticky agents and acrylic emulsion type sticky agents (water-based) are particularly preferable. Here, the acrylic-based sticky agent in the present description denotes a composition containing a poly(meth)acrylic acid ester and a tackifier as main components unless otherwise specifically noted. Furthermore, a degradation prevention agent such as an antioxidant and an inorganic filler such as calcium carbonate, talc, and silica can be added as necessary to the component of the sticky layer.

The method for forming the sticky layer on the surface of the entry sheet is not particularly limited as long as it is a publicly known method that is industrially used. Examples thereof include a method in which a sticky layer is formed by a roll method, a curtain coating method, a spray jetting method, or the like, a method in which a sticky layer is formed using a roll or T-die extruder, or the like, and other methods. The thickness of the sticky layer is not particularly limited, and the optimum thickness can appropriately be selected considering the curvature of the workpiece (for example, a metal) and the constitution of the resin sheet and entry sheet.

Hereinafter, the entry sheet in the cutting method of the present embodiment and the method for producing the entry sheet will be mentioned.

### <Entry Sheet Containing Metal Foil>

In the present embodiment, the thickness of the metal foil that can be used in the entry sheet containing a metal foil is not particularly limited, however it is preferable that the thickness of the metal foil is 0.05 to 0.5 mm, more preferably 0.05 to 0.3 mm. When the thickness of the metal foil is 0.05 mm or more, the handling property during production of the entry sheet or drilling is improved. On the other hand, when the thickness of the metal foil is 0.5 mm or less, it becomes easy to discharge cutting chips generated during cutting.

In the present embodiment, the kind of the metal foil that can be used in the entry sheet containing a metal foil is not particularly limited, however the aluminum foil is preferable. The reason is because, in the case where the aluminum foil is used as the metal foil, the aluminum foil has a moderate softness when compared with the workpiece, therefore, in the case where drilling is performed for example, there is an effect of suppressing the wobbling of the core of the drill when the rotating drill enters the aluminum foil, and, as a result thereof, a hole the position of which is correct relative to the set coordinates can be bored. Moreover, by suppressing the wobbling of the core of the rotating drill, the moving distance of the drill and the contact area with the workpiece become small, and therefore there is also an effect of reducing the wear of the drill.

The purity of aluminum in the case where the aluminum foil is used as the metal foil is not particularly limited, however it is preferable that aluminum has a purity of 95% or more. The reason is because, in the case where drilling is performed for example, the breakage, local wear, or the like of the drill caused by impurities contained in the aluminum foil can be reduced by using high-purity aluminum foil as the metal foil, thereby making it possible to reduce cutting load to the drill. Examples of such an aluminum foil include, but not particularly limited to, 5052, 3004, 3003, 1N30, 1N99, 1050, 1070, 1085, 1100, 8021, and so on specified in JIS-H4160.

In the present embodiment, the method for producing the entry sheet containing a metal foil is not particularly limited, and a general method for producing a metal foil can be used.

### <Entry Sheet Containing Resin Sheet>

Examples of the method for producing the entry sheet that is used in the present embodiment and contains a resin sheet include, but not limited to, a method for producing an entry sheet containing a resin sheet in which a resin composition is appropriately melted to change into a liquid form, then the resin composition is applied on a support, cooled, and solidified to form a resin composition layer, and thereafter the support is removed or released. Moreover, the examples also include a method for producing an entry sheet containing a resin sheet in which a resin composition is dissolved or dispersed in a solvent to change into a liquid form, then the resin composition is applied on a support, dried, cooled, and solidified to form a resin composition layer, and thereafter the support is removed or released. In producing the entry sheet, the support is not particularly limited, and a metal foil or film, a metal roll, and so on can appropriately be used. The method for forming the resin composition layer in a liquid form on a support is not particularly limited as long as it is a publicly known method that is industrially used. Examples thereof include a method in which a resin composition layer is formed on a support by a coating method or the like applying the resin composition dissolved or dispersed in a solvent using a bar coater, a gravure roll, a die, or the like and a method in which a resin composition is appropriately heated and melted to be mixed using a roll, a kneader, or another kneading method, and then a resin composition layer is formed on a support by a roll method, a curtain coating method, or the like. Moreover, other than the above-described methods for forming a resin composition layer on a support, a method or the like in which a resin composition is appropriately heated and melted to be mixed using a roll, a kneader, or another kneading method, and a resin composition layer having a desired thickness is formed as a resin sheet using a roll, a T-die extruder or the like without using a support can also be used.

As mentioned above, water soluble resins and water insoluble resins are used as the component of the resin composition used for the resin sheet contained in the entry sheet, and also in the entry sheet that can be used in the cutting method of the present embodiment, water soluble resins and water insoluble resins can be used as the component of the resin composition. These resins have a role of improving the lubricity during cutting as the lubricity-improving component or have a role of improving the processability as the resin sheet-forming component. Among these resins, water soluble resins have an effect of improving discharge property of cut chips during cutting due to the lubricity of the resins. Moreover, the resin sheet containing a water soluble resin as the component of the resin composition has a moderately soft surface hardness and therefore also has an effect of reducing the load of processing of cutting tools. Furthermore, it is possible to easily remove, after cutting, the resin component adhered to the processed hole. On the other hand, the resin sheet using a water insoluble resin as the component of the resin composition has a higher surface hardness than the resin sheet using a water soluble resin and therefore, in the case where drilling is performed for example, has a characteristic that the biting property of the drill is favorable and the holes can be bored at a position as designed. Moreover, the resin sheet has a high rigidity and therefore is excellent in handling property.

In the entry sheet containing a resin sheet used in the present embodiment, a category of preferable water soluble resins as the component of the resin composition in the resin sheet is a polymer compound that dissolves 1 g or more relative to 100g of water at 25°C and 1 atm. Examples of such a water soluble resin include, but not particularly limited to, polyethylene oxides, polyethylene glycols, polypropylene oxides, water soluble urethanes, polyether-based water soluble resins, water soluble polyesters, sodium polyacrylates, polyacrylamides, polyvinyl pyrrolidones, polyvinyl alcohols, polyalkylene glycols, esters of polyalkylene glycols, ethers of polyalkylene glycols, polyglycerin monostearates, polyoxyethylene/propylene copolymers, and derivatives thereof, and at least one of these can be selected and used. Among these, polyethylene oxides, polyethylene glycols, and polyether-based water soluble resins are more preferable as the component of the resin composition.

In the entry sheet containing a resin sheet used in the present embodiment, another category of preferable water soluble resins as the component of the resin composition of the resin sheet is a cellulose derivative. In addition, the "cellulose" in the present embodiment means a polymer compound in which a large number of β-glucoses are bonded through a glycosidic bond and in which hydroxy groups bonded to a carbon atom at 2-position, 3-position, and 6-position in the glucose ring of cellulose are unsubstituted. Moreover, the "hydroxy groups contained in cellulose" denote hydroxy groups that are bonded to a carbon atom of 2-position, 3-position, and 6-position in the glucose ring of cellulose. Examples of the cellulose derivative include, but not limited to, hydroxyethyl cellulose and carboxymethyl cellulose. Hydroxyethyl cellulose, in general, is a compound in which at least part of hydrogen atoms in hydroxy groups contained in cellulose {H-(C₆H₁₀O₅)ₙ-OH} is substituted by [-(CH₂-CH₂-O)ₘ-H] (where, n and m are integers of 1 or more), and has a solubility to water of at least 0.05 g/L at 25°C and 1 atm. The hydroxyethyl cellulose is synthesized by, for example, adding an ethylene oxide to cellulose.

On the other hand, carboxymethyl cellulose is a compound in which at least part of hydrogen atoms in hydroxy groups contained in cellulose {H-(C₆H₁₀O₅)ₙ-OH} is substituted by a carboxymethyl group [-CH₂-COOH] (where n is an integer of 1 or more), and has a solubility to water of at least 0.05 g/L at 25°C and 1 atm. Moreover, part of carboxy groups in the carboxymethyl group may be a sodium salt. Carboxymethyl cellulose can be obtained by, for example, adding chloroacetic acid to cellulose.

In the entry sheet containing a resin sheet used in the present embodiment, the water insoluble resin that can be used as the component of the resin composition of the resin sheet is not particularly limited. In the present embodiment, the water insoluble resin is used as the resin sheet-forming component, the lubricity-improving component, or the like. Examples of the preferable water insoluble resin that is used as resin sheet-forming component include, but not particularly limited to, urethane-based resins, acrylic-based resins, vinyl acetate-based resins, vinyl-chloride-based resins, polyester-based resins, copolymers thereof, phenol resins, epoxy resins, melamine resins, urea resins, unsaturated polyester resins, alkyd resins, polyurethanes, thermosetting polyimides, cyanate resins, epoxy resins, polyester-based resins. Moreover, at least one of these can be selected and used as the resin component. On the other hand, examples of the preferable water insoluble resin that is used as the lubricity-improving component include amide-based compounds such as modified polyamides, ethylene bis-stearamide, oleic acid amide, stearic acid amide, and methylene bis-stearamide; fatty acid-based compounds such as lauric acid, stearic acid, palmitic acid, and oleic acid; fatty acid ester-based compounds such as butyl stearate, butyl oleate, and glycol laurate; aliphatic hydrocarbon-based compounds such as liquid paraffin and polyethylene wax; higher aliphatic alcohols such as oleyl alcohol; and polystyrene-based resins such as styrene homopolymers (GPPS), styrene-butadiene copolymers (HIPS), and styrene-(meth)acrylic acid copolymers (for example, MS resins). At least one of these can be selected and used as the lubricity-improving component. Furthermore, in the entry sheet that is used in the present embodiment, the sheet-forming component and the lubricity-improving component can be used together.

The thickness of the resin sheet in the entry sheet containing the resin sheet used in the present embodiment is appropriately selected considering the kind and thickness of the metal to be an object of cutting, the kind of cutting tools used for cutting, the cutting method, and the drill diameter used in boring, or the like. The thickness of the resin sheet is preferably in a range from 0.1 to 20 mm, more preferably in a range from 0.2 to 10 mm, further preferably in a range from 0.5 to 5 mm. When the thickness of the resin sheet is 0.1 mm or more, a sufficient reduction in cutting stress is obtained, and in the case where drilling is performed for example, the load to the drill becomes small and the breakage of the drill is hard to occur. On the other hand, when the thickness of the resin sheet is 20 mm or less, winding of the resin composition on the drill is reduced and cracks or the like is hard to occur in the resin sheet in the case where drilling is performed for example. Particularly in the case where the thickness of the resin sheet is within the above-described range in the intended cutting, it can be suppressed for the resin composition to play a roll of a binder for cut powder and it can be avoided for the cut powder to remain in the cutting portion, and therefore the rise in the temperature around the cutting portion can be suppressed and welding of the object of cutting (for example, a metal) can be suppressed. That is to say, by appropriately adjusting the constitution of the resin sheet, the components of the resin composition, and the thickness of the resin sheet according to the object of cutting and the cutting method, the lubricity and the discharge of the cut powder through a processed groove can be optimized. As described above, it is preferable to appropriately control the total thickness of the resin sheet in the present embodiment, and it is also possible to use thin resin sheets in such a way that a plurality of thin resin sheets are overlaid.

The resin sheet in the entry sheet containing the resin sheet used in the present embodiment may have a structure configured of a single resin composition layer or a structure configured of a plurality of resin composition layers, however it is preferable that the resin sheet contains a layered structure in which two or more resin composition layers are laminated from the reasons with regard to properties and improvements in operability. The combination of the resin composition layers in the entry sheet used in the present embodiment is not particularly limited, however it is preferable in terms of a high processing accuracy, a long processing lifetime, and a favorable handling property to appropriately combine: a resin composition layer made of a water soluble resin having a role of improving the lubricity during processing or a water insoluble resin as a lubricity-improving component; and a resin composition layer made of a water insoluble resin as a resin sheet component having a role of improving the positional accuracy and improving the rigidity.

In the entry sheet containing a resin sheet used in the present embodiment, examples of the method for producing the resin sheet that contains a layered structure in which a plurality of resin composition layers are laminated include, but not particularly limited to, a method in which, on at least one face of a resin sheet being prepared in advance and made of a single resin composition layer or a plurality of resin composition layers, a resin composition layer is further formed directly. Examples of the method for forming the resin composition layer on one face of the resin sheet include, but not particularly limited to, a method in which a resin composition is appropriately melted to change into a liquid form, and then the resin composition in a liquid form is applied on the resin sheet as a support, cooled, and solidified to form a resin composition layer. Moreover, the examples also include a method in which a resin composition is dissolved or dispersed in a solvent to change into a liquid form, then the resin composition in a liquid form is applied on the resin sheet as a support, dried, cooled, and solidified to form a resin composition layer. The method for forming the resin composition layer in a liquid form on the resin sheet as a support is not particularly limited as long as it is a publicly known method that is industrially used. Examples thereof include a method in which a resin composition layer is formed by a coating method or the like applying the resin composition dissolved or dispersed in a solvent using a bar coater, a gravure roll, a die, or the like, and a method in which a resin composition is appropriately heated and melted to be mixed using a roll, a kneader, or another kneading method, and then a resin composition layer is formed by a roll method, a curtain coating method, or the like.

As another method for producing a resin sheet that contains a layered structure in which a plurality of resin composition layers are laminated, a method in which a plurality of resin sheets each made of a single resin composition layer or a plurality of resin composition layers are overlaid and stuck together using a resin or by a heat lamination method is also listed. The method of sticking the resin sheets together using a resin or the heat lamination method is not particularly limited as long as it is a publicly known method that is industrially used.

In the entry sheet containing a resin sheet used in the present embodiment, an additive can be blended as necessary in the resin composition of the resin sheet. The kind of the additive is not particularly limited, however, for example, a surface adjusting agent, a leveling agent, an antistatic agent, an emulsifying agent, an antifoaming agent, a wax additive, a coupling agent, a rheology control agent, an antiseptic agent, an antifungal agent, an antioxidant, a light stabilizer, a nucleating agent, an organic filler, an inorganic filler, a plasticizer, a softening agent, a heat stabilizer, and a coloring agent can be used.

The solid lubricant contained in the resin sheet has an effect of improving the lubricity of the entry sheet and prolonging the processing lifetime of cutting tools, and therefore the resin composition which forms the resin sheet is a resin composition containing a solid lubricant in the entry sheet used in the present embodiment. The solid lubricant is selected from graphite, molybdenum disulfide, tungsten disulfide, molybdenum compounds, polytetrafluoroethylenes, and polyimides. Among these, graphite is preferable because graphite has a moderate hardness, and natural graphite, artificial graphite, activated carbon, acetylene black, carbon black, colloidal graphite, pyrolytic graphite, expanded graphite, and scaly graphite can suitably be used. Among these, scaly graphite is particularly preferable because the reduction of wear can be improved more effectively due to the shape and particle diameter. These graphites may be used alone or in combination of two or more.

In the entry sheet containing a resin sheet used in the present embodiment, the effect of using the solid lubricant and the resin composition in combination can be explained as follows. In drilling for example, the resin composition and the solid lubricant exhibit lubricity by adhering to the surface and groove of the drill and the side face of the processed holes of the workpiece. When the solid lubricant is adhered thereto, the change in volume and hardness associated with the temperature change is smaller in the solid lubricant as compared with the resin composition, and therefore, in the case where drilling is performed for example, the constant volume and hardness can be maintained with the solid lubricant even when the temperature of the drill and processed portion rises. That is to say, in the case where drilling is performed for example, the solid lubricant constantly exists between the drill and the workpiece to enhance the lubricity and can exhibit the effect similar to the effect exhibited by a bearing, and therefore the solid lubricant has an effect of suppressing the wear of the drill.

The reason why graphite is preferable among the solid lubricants that can be used for the entry sheet is mentioned. When the solid lubricant has a small hardness, the solid lubricant has a poor bearing effect and it sometimes occurs that the lubricity is lowered. On the other hand, when the solid lubricant has a large hardness, there is a possibility that the problem of acceleration in the wear of the drill tip or breakage of the drill tip occurs in the case where drilling is performed for example. Therefore, graphite having a moderate hardness is preferable as the solid lubricant.

With respect to the amount of the solid lubricant used, it is preferable to use 5 parts by weight to 200 parts by weight of the solid lubricant in total based on 100 parts by weight of the resin composition, more preferably 10 parts by weight to 100 parts by weight, particularly preferably 20 parts by weight to 100 parts by weight. In the case where the amount of the solid lubricant used is 5 parts by weight or more, the lubricating effect due to the solid lubricant is fully exerted because the amount of the solid lubricant relative to the amount of the resin composition is sufficient. On the other hand, the amount of the solid lubricant used of 200 parts by weight or less has economic rationality and is advantageous in production.

When the entry sheet containing a resin sheet used in the present embodiment is used, the workpiece (for example, a metal) is not always plane, and it sometimes occurs that the workpiece has a curved surface. Therefore, curved-surface conformability (flexibility) is sometimes required for the entry sheet containing a resin sheet used in the present embodiment. In the entry sheet containing a resin sheet used in the present embodiment, it is preferable to blend a plasticizer or a softening agent as necessary in the resin composition of the resin sheet for the purpose of imparting curved-surface conformability. As the plasticizer and the softening agent, phthalic acid esters, adipic acid esters, trimellitic acid esters, polyesters, phosphoric acid esters, citric acid esters, epoxidized vegetable oils, sebacic acid esters, and so on are preferable. When the entry sheet is arranged on the curved surface of the workpiece (for example, a metal), the stress or strain to the resin sheet is reduced by blending the plasticizer or the softening agent, thereby making it possible to suppress cracks in the resin sheet.

### <Entry Sheet Containing Metal Foil and Resin Sheet>

In the cutting method of the present embodiment, the entry sheet containing the above-described metal foil or resin sheet can suitably be used, however the entry sheet described below and having a metal foil at least one face of the resin sheet is more preferable. The reason is because, when the entry sheet having a metal foil on at least one face of the resin sheet is used, the centripetal property of the drill is improved due to the rigidity of the metal foil in the case where drilling is performed for example, thereby making it possible to bore a hole at a position as designed. Moreover, by arranging the metal foil between the object of cutting (for example, a metal) and the resin sheet, there is also an effect of preventing the thermally melted resin composition of the resin sheet from fixing at the upper portion and inside of the processed holes. Among others, a three-layer structure-containing entry sheet having metal foils on both faces of the resin sheet is particularly preferable because the lubricity of the resin sheet can fully be exerted. When the metal foil is arranged on the outermost layer of the drill-entering face in the case where drilling is performed for example, it can be suppressed for the resin sheet to be scooped out by rotating cut chips of the object of cutting (for example, a metal) that are wound around the drill in cutting the object of cutting (for example, a metal). As a result thereof, the lubricity can fully be exerted and the effect of reducing the wear of the drill is improved.

As the above-described metal foil and resin sheet that constitute the entry sheet having the metal foil at least one face of the resin sheet, the metal foil and the resin sheet explained in the paragraphs of Entry Sheet Containing Metal Foil and the paragraphs of Entry Sheet Containing Resin Sheet can be used. Moreover, as the component that can be added to the resin sheet, the same component explained in the same paragraphs can be used.

In the present embodiment, examples of the method for preparing the entry sheet having a metal foil on at least one face of the resin sheet include, but not particularly limited to, a method in which a single resin composition layer or a plurality of resin composition layers are directly formed on at least one face of the metal foil and a method in which a resin sheet and a metal foil each prepared in advance are stuck together by a heat lamination method or the like. Examples of the method for directly forming the single resin composition layer or the plurality of resin composition layers on at least one face of the metal foil include, but not particularly limited to, a method in which a resin composition is appropriately melted to change into a liquid form, and then the resin composition in a liquid form is applied on the metal foil as a support once or a plurality of times, cooled, and solidified to form a single resin composition layer or a plurality of resin composition layers. Moreover, the examples also include a method in which a resin composition is dissolved or dispersed in a solvent to change into a liquid form, and then the resin composition in a liquid form is applied on the metal foil as a support once or a plurality of times, dried, cooled, and solidified to form a single resin composition layer or a plurality of resin composition layers. The method for forming the resin composition layer in a liquid form on the metal foil as a support is not particularly limited as long as it is a publicly known method that is industrially used. Examples thereof include a method in which a resin composition layer is formed by a coating method or the like applying the resin composition dissolved or dispersed in a solvent using a bar coater, a gravure roll, a die, or the like, and a method in which a resin composition is appropriately heated and melted to be mixed using a roll, a kneader, or another kneading method, and then a resin composition layer is formed by a roll method, a curtain coating method, or the like. On the other hand, the method for sticking the resin sheet and the metal foil together by a heat lamination method is not particularly limited as long as it is a publicly known method that is industrially used.

When the entry sheet having a metal foil on at least one face of the resin sheet is prepared in the present embodiment, an adhesive layer may be formed between the metal foil and the resin sheet. In the entry sheet used in the present embodiment, it is preferable to form the adhesive layer between the metal foil and the resin sheet because adhesiveness between the metal foil and the resin sheet can be made favorable. In addition, a layer of a compound used for making the adhesiveness between the metal foil and the resin sheet favorable is defined as the adhesive layer in the present description. The resin that can be used for the adhesive layer is not particularly limited, and, for example, thermoplastic resins and thermosetting resins can be used. Moreover, the thermoplastic resin and the thermosetting resin may be used together. Preferable thermoplastic resins include urethane-based resins, acrylic-based resins, vinyl acetate-based resins, vinyl chloride-based resins, polyester-based resins, and copolymers thereof. Moreover, preferable thermosetting resins include phenol resins, epoxy resins, melamine resins, urea resins, unsaturated polyester resins, alkyd resins, polyurethanes, thermosetting polyimides, and cyanate resins. Among these, epoxy resins and unsaturated polyester-based resins are more preferable. It is preferable that the thickness of the adhesive layer is 0.001 to 0.5 mm. The reason is because a sufficient adhesive effect is obtained within the range for the purpose of making the adhesiveness between the metal foil and the resin sheet favorable. Moreover, the method for forming the adhesive layer is also not particularly limited as long as it is a publicly known method that is industrially used. Examples thereof include a method in which an adhesive layer is formed by a coating method or the like applying the resin dissolved or dispersed in a solvent using a bar coater, a gravure roll, a die, or the like, and a method in which the resin is appropriately heated and melted to be mixed using a roll, a kneader, or another kneading method, and then an adhesive layer is formed by a roll method, a curtain coating method, or the like. Moreover, there occurs no problem when a commercially available product obtained by coating a metal foil with an adhesive layer is used as the metal foil that is used in the present embodiment.

The through hole of the present embodiment is a through hole formed by the above-mentioned cutting method. The maximum value of the burr height at the exit portion of the through hole formed by the above-mentioned cutting method, for example by drilling, can be made 0.3 mm or less, or 0.2 mm or less, the average value can be made 0.1 mm or less, or 0.08 mm or less, the standard deviation can be made 0.1 mm or less, or 0.05 mm or less. Furthermore, the burr height has a characteristic that an extreme increase in burr height is not observed even when the accumulated number of processed holes per one drill is increased as long as the cutting edge of the drill is completely exhausted.

The thickness of each layer such as the resin sheet layer, the metal foil, the adhesive layer, or the sticky layer that constitutes the entry sheet can be measured in the following manner. First of all, the entry sheet is sectioned in a direction perpendicular to the entry sheet using a cross-section polisher (CROSS-SECTION POLISHER SM-09010 manufactured by JEOL Ltd. DATUM) or an ultramicrotome (EM UC7 manufactured by Leica Microsystems Co., Ltd.). Next, the cut section is observed from a direction perpendicular to the cut section using a SEM (Scanning Electron Microscope, VE-7800 manufactured by KEYENCE CORPORATION) to measure the thickness of each layer that constitutes the entry sheet. In measuring the thickness, the thickness at 5 points per 1 visual field is measured, and the average value is defined as the thickness of each layer.

The method for producing a fiber reinforced composite material of the present embodiment includes a step of cutting fiber reinforced composite material which comprises a carbon fiber reinforced plastic by the above-mentioned cutting method. Moreover the method for producing a metal of the present embodiment includes a step of cutting a metal comprises a titanium alloy or an aluminum alloy by the above-mentioned cutting method.

### Examples

Hereinafter, the present invention will be explained specifically showing Examples, Reference Examples and Comparative Examples. In addition, the following Examples merely show embodiments of the present invention, and the present invention is not limited to these Examples. The Reference Examples and Comparative Examples are not embodiments of the present invention.

Specifications of the resin components, etc. used for production of entry sheets of Reference Examples 1-1 to 1-9 and specifications of bored materials and apparatuses used for evaluation in Reference Examples 1-1 to 1-9 and Comparative Examples 1-1 to 1-5 are shown in Table 1-1.

**[Table 1-1]**

| Category | Sign | Name | Product name/ model number | Manufacturer | Notes |
|---|---|---|---|---|---|
| Resin components | - | Polyethylene glycol/dimethyl terephthalate polycondensate | PaogenPP-15 | DKS Co., Ltd. | Mw=100,000 |
| | - | Polyethylene oxide | Altop MG150 | Meisei Chemical Works, Ltd. | Mw= 150,000 |
| | - | Polyethylene glycol | PEG4000S | Sanyo Chemical Industries, Ltd. | Mw=4,000 |
| | - | Polyoxyethylene monostearate | NONION S-40 | NOF CORPORATION | Mw=3,500 |
| Solid lubricant | - | Graphite | X-100 | Ito Graphite Co., Ltd. | Scaly, average particle diameter = 60 µm |
| Metal foil | - | Aluminum foil | 1N30-H18 | Mitsubishi Aluminum Co., Ltd. | Thickness: 0.15 mmt |
| Workpiece | C01 | Carbon fiber reinforced plastic | - | - | Thickness: 12.5 mmt, pseudo-isotropic lamination in 4 directions [-45°/0°/45°/90°] |
| | C02 | Carbon fiber reinforced plastic | - | - | Thickness: 4.0 mmt, CFRP plain weave with mat finish on front and back. General purpose material |
| Cemented carbide drills | D01 | Cemented carbide drills | - | OSG Corporation | Diameter: 6.0 mmφ, tip angle: 120°, twist angle: 40° cemented carbide (K10), without diamond coating |
| | D02 | | SDS-060 | DIJET, Co., LTD. | Diameter: 6.0 mmφ, tip angle: 120°, twist angle: 40° solid drill, without diamond coating |
| Boring apparatus | - | Milling machine | 2MF-V | Hitachi Seiko Co., Ltd. | |
| Evaluation apparatuses | - | Six-component dynamometer | LAT-1000A | Kyowa Electronic Instruments Co., Ltd. | |
| | - | FE-SEM | JSM-7000FK | JEOL Ltd. | |
| | - | Inside micrometer | TT-60 | TESA AG | |

### <Preparation Example of Entry Sheet>

### (Preparation of Sheet 1-A)

Using a bidirectional kneader, 30 parts by weight of polyethylene glycol/dimethyl terephthalate polycondensate (Paogen PP-15, manufactured by DKS Co., Ltd) and 70 parts by weight of polyoxyethylene monostearate (NONION S-40, manufactured by NOF CORPORATION) were kneaded in a nitrogen atmosphere at a temperature of 150°C to obtain a kneaded material. The obtained kneaded material was molded with an extruder to prepare Sheet 1-A as a resin sheet having a thickness of 0.2 mm.

### (Preparation of Sheet 1-B)

Using a bidirectional kneader, 20 parts by weight of polyethylene glycol/dimethyl terephthalate polycondensate (Paogen PP-15, manufactured by DKS Co., Ltd), 20 parts by weight of polyethylene oxide (Altop MG150, manufactured by Meisei Chemical Works, Ltd.), 60 parts by weight of polyoxyethylene monostearate (NONION S-40, manufactured by NOF CORPORATION), and 50 parts by weight of graphite (X-100, manufactured by Ito Graphite Co., Ltd.) were kneaded in a nitrogen atmosphere at a temperature of 150°C to obtain a kneaded material. A resin sheet having a thickness of 0.2 mm was prepared by molding the obtained kneaded material with an extruder. An aluminum foil having a thickness of 0.15 mm (1N30-H18, manufactured by Mitsubishi Aluminum Co., Ltd.) the one face of which a polyester-based resin layer (Vylonal MD-1200, manufactured by Toyobo Co., Ltd) having a thickness of 0.01 mm was formed as an adhesive layer was separately prepared. On the aluminum foil on which the adhesive layer was formed, 5 resin sheets prepared above were overlaid, and the aluminum foil and the resin sheets were laminated and integrated by heat lamination at a temperature of 150°C using a lamination apparatus (OHL-2400, manufactured by ONC Inc.) to prepare Sheet 1-B.

### (Preparation of Sheet 1-C)

Using a bidirectional kneader, 20 parts by weight of polyethylene glycol/dimethyl terephthalate polycondensate (Paogen PP-15, manufactured by DKS Co., Ltd), 20 parts by weight of polyethylene oxide (Altop MG150, manufactured by Meisei Chemical Works, Ltd.), and 60 parts by weight of polyoxyethylene monostearate (NONION S-40, manufactured by NOF CORPORATION) were kneaded in a nitrogen atmosphere at a temperature of 150°C to obtain a kneaded material. A resin sheet having a thickness of 0.2 mm was prepared by molding the obtained kneaded material with an extruder. An aluminum foil having a thickness of 0.15 mm (1N30-H18, manufactured by Mitsubishi Aluminum Co., Ltd.) the one face of which a polyester-based resin layer (Vylonal MD-1200, manufactured by Toyobo Co., Ltd) having a thickness of 0.01 mm was formed as an adhesive layer was separately prepared. On the aluminum foil on which the adhesive layer was formed, 5 resin sheets prepared above were overlaid, and, on the uppermost portion thereof, the same aluminum foil as prepared above was further laminated. In laminating the aluminum foil, the resin sheet and the aluminum foil were arranged so that the resin sheet and the adhesive layer on the surface of the aluminum foil contacted each other, and the resin sheet and the aluminum foil were laminated and integrated by heat lamination at a temperature of 150°C using a lamination apparatus (OHL-2400, manufactured by ONC Inc.) to prepare Sheet 1-C.

### (Preparation of Sheet 1-D)

Using a bidirectional kneader, 20 parts by weight of polyethylene glycol/dimethyl terephthalate polycondensate (Paogen PP-15, manufactured by DKS Co., Ltd), 20 parts by weight of polyethylene oxide (Altop MG150, manufactured by Meisei Chemical Works, Ltd.), 60 parts by weight of polyoxyethylene monostearate (NONION S-40, manufactured by NOF CORPORATION), and 50 parts by weight of graphite (X-100, manufactured by Ito Graphite Co., Ltd.) were kneaded in a nitrogen atmosphere at a temperature of 150°C to obtain a kneaded material. A resin sheet having a thickness of 0.2 mm was prepared by molding the obtained kneaded material with an extruder. An aluminum foil having a thickness of 0.15 mm (1N30-H18, manufactured by Mitsubishi Aluminum Co., Ltd.) the one face of which a polyester-based resin layer (Vylonal MD-1200, manufactured by Toyobo Co., Ltd) having a thickness of 0.01 mm was formed as an adhesive layer was separately prepared. On the aluminum foil on which the adhesive layer was formed, 5 resin sheets prepared above were overlaid, and, on the uppermost portion thereof, the same aluminum foil as prepared above was further laminated. In laminating the aluminum foil, the resin sheet and the aluminum foil were arranged so that the resin sheet and the adhesive layer on the surface of the aluminum foil contacted each other, and the resin sheet and the aluminum foil were laminated and integrated by heat lamination at a temperature of 150°C using a lamination apparatus (OHL-2400, manufactured by ONC Inc.) to prepare Sheet 1-D.

### (With Respect to Sheet 1-E)

An aluminum foil (1N30-H18, manufactured by Mitsubishi Aluminum Co., Ltd.) having a thickness of 0.15 mm was used as Sheet 1-E.

### <Reference Examples 1-1 to 1-9>

Each sheet prepared in the manner as described above was fixed on a cutting tool (cemented carbide drill)-entering face of the workpiece with a jig. With respect to Reference Examples 1-2 to 1-9, the entry sheet was arranged so that the aluminum foil of the entry sheet contacted the cutting face of the workpiece. Boring was performed under the cutting condition with the cemented carbide drill where the number of revolutions was 5,000 rpm and the feed rate was 500 mm/min and also under the condition, as other conditions, as shown in Table 1-2. With respect to Reference Example 1-1, the thrust force, the cutting torque, the wear loss of the drill, the inner diameter of holes, the change in inner diameter of holes were evaluated. The evaluation results are shown in Table 1-3. With respect to Reference Examples 1-2 to 1-9, the inner wall roughness of holes and the wear loss of the drill were evaluated. The evaluation results are shown in Table 1-4.

### <Comparative Examples 1-1 to 1-6>

Boring was performed in the same manner as in Reference Examples 1-1 to 1-6 except that a sheet was not arranged on the cutting face of the workpiece. Boring conditions are described in Table 1-2. With respect to Comparative Example 1-1, the thrust force, the cutting torque, the wear loss of the drill, the inner diameter of holes, and the change in the inner diameter of holes were evaluated in the same manner as in Reference Example 1-1. The evaluation results are shown in Table 1-3. With respect to Comparative Examples 1-2 to 1-6, the inner wall roughness of holes and the wear loss of the drill were evaluated. The evaluation results are shown in Table 1-4.

**[Table 1-2]**

| Category | Workpiece | | | Drill | | Sheet | Evaluation Items |
|---|---|---|---|---|---|---|---|
| | Kind | Number of overlays | Total thickness | Kind | Lifetime | | |
| | - | [Sheets] | [mm] | - | [Holes] | - | |
| Reference Example 1-1 | C01 | 1 | 12.5 | D01 | 10 | 1-A | Thrust force, cutting torque, wear loss of drill, inner diameter of holes, and change in inner diameter of holes |
| Reference Example 1-2 | C02 | 5 | 20 | D02 | 10 | 1-B | Inner wall roughness of holes and wear loss of drill |
| Reference Example 1-3 | C02 | 5 | 20 | D02 | 50 | 1-B | Inner wall roughness of holes and wear loss of drill |
| Reference Example 1-4 | C02 | 5 | 20 | D02 | 100 | 1-B | Inner wall roughness of holes and wear loss of drill |
| Reference Example 1-5 | C02 | 5 | 20 | D02 | 150 | 1-B | Inner wall roughness of holes and wear loss of drill |
| Reference Example 1-6 | C02 | 7 | 28 | D02 | 150 | 1-B | Inner wall roughness of holes and wear loss of drill |
| Reference Example 1-7 | C02 | 5 | 20 | D02 | 150 | 1-C | Inner wall roughness of holes and wear loss of drill |
| Reference Example 1-8 | C02 | 5 | 20 | D02 | 150 | 1-D | Inner wall roughness of holes and wear loss of drill |
| Reference Example 1-9 | C02 | 5 | 20 | D02 | 150 | 1-E | Inner wall roughness of holes and wear loss of drill |
| Comparative Example 1-1 | C01 | 1 | 12.5 | D01 | 10 | - | Thrust force, cutting torque, wear loss of drill, inner diameter of holes, and change in inner diameter of holes |
| Comparative Example 1-2 | C02 | 5 | 20 | D02 | 10 | - | Inner wall roughness of holes and wear loss of drill |
| Comparative Example 1-3 | C02 | 5 | 20 | D02 | 50 | - | Inner wall roughness of holes and wear loss of drill |
| Comparative Example 1-4 | C02 | 5 | 20 | D02 | 100 | - | Inner wall roughness of holes and wear loss of drill |
| Comparative Example 1-5 | C02 | 5 | 20 | D02 | 150 | - | Inner wall roughness of holes and wear loss of drill |
| Comparative Example 1-6 | C02 | 7 | 28 | D02 | 150 | - | Inner wall roughness of holes and wear loss of drill |

**[Table 1-3]**

| Category | Number of cut holes | Thrust force | Cutting torque | Wear loss of drill | Inner diameter of holes (measured values) | | | Change in inner diameter of holes when the inner diameter of the first hole on the drill-entering side is assumed to be 100 | | |
|---|---|---|---|---|---|---|---|---|---|---|
| | | | | | Drill entry side | Central portion | Drill exit side | Drill entry side | Central portion | Drill exit side |
| | | (N) | (Nm) | (10⁻³ mm³) | (mm) | (mm) | (mm) | (%) | (%) | (%) |
| Reference Example 1-1 | 1st hole | 14 | 0.14 | - | 5.993 | 5.992 | 5.992 | 100.00 | 99.98 | 99.98 |
| | 6th hole | 29 | 0.38 | - | 5.990 | 5.993 | 5.990 | 99.95 | 100.00 | 99.95 |
| | 10th hole | 37 | 0.37 | 1.1 | 5.990 | 5.992 | 5.991 | 99.95 | 99.98 | 99.97 |
| Comparative Example 1-1 | 1st hole | 15 | 0.39 | - | 6.000 | 6.000 | 6.000 | 100.00 | 100.00 | 100.00 |
| | 6th hole | 32 | 0.52 | - | 5.990 | 5.996 | 5.993 | 99.83 | 99.93 | 99.88 |
| | 10th hole | 42 | 0.59 | 1.5 | 5.988 | 5.994 | 5.997 | 99.80 | 99.90 | 99.95 |

**[Table 1-4]**

| Category | Inner wall roughness of holes Ra | | | Inner wall roughness of holes Rz | | | Wear loss of drill |
|---|---|---|---|---|---|---|---|
| | Drill entry side | Central portion | Drill exit side | Drill entry side | Central portion | Drill exit side | |
| | (µm) | (µm) | (µm) | (µm) | (µm) | (µm) | (10⁻³mm³) |
| Reference Example 1-2 | 1.9 | 2.3 | 1.8 | 25.3 | 24.0 | 25.1 | 0.03 |
| Reference Example 1-3 | 2.7 | 2.3 | 2.3 | 21.3 | 29.0 | 30.4 | 0.14 |
| Reference Example 1-4 | 2.9 | 3.2 | 3.5 | 29.2 | 35.3 | 38.1 | 0.49 |
| Reference Example 1-5 | 3.2 | 2.9 | 3.1 | 34.1 | 31.8 | 36.2 | 1.07 |
| Reference Example 1-6 | 3.5 | 3.1 | 3.3 | 37.7 | 38.3 | 45.5 | 1.46 |
| Reference Example 1-7 | 3.2 | 3.0 | 3.5 | 33.7 | 26.5 | 35.1 | 0.97 |
| Reference Example 1-8 | 2.6 | 2.7 | 3.3 | 31.9 | 25.8 | 33.2 | 0.59 |
| Reference Example 1-9 | 2.8 | 3.5 | 4.2 | 37.3 | 35.4 | 51.6 | 1.18 |
| Comparative Example 1-2 | 2.8 | 2.6 | 3.0 | 30.7 | 27.9 | 35.7 | 0.04 |
| Comparative Example 1-3 | 3.0 | 2.6 | 2.6 | 38.0 | 33.0 | 37.8 | 0.14 |
| Comparative Example 1-4 | 3.9 | 3.5 | 4.2 | 50.3 | 49.8 | 71.8 | 0.51 |
| Comparative Example 1-5 | 4.8 | 3.8 | 4.7 | 57.1 | 56.0 | 81.5 | 1.64 |
| Comparative Example 1-6 | 6.8 | 5.9 | 5.9 | 64.2 | 66.1 | 75.8 | 4.23 |

The results of Reference Example 1-1 and Comparative Example 1-1 in Table 1-3 are shown in Figure 1-1 to Figure 1-4 for every evaluation item. It was confirmed that the cutting stress (thrust force) applied in the perpendicular direction of the drill was reduced by around 10% at the maximum value by arranging the resin sheet given in Reference Example 1-1 on the drill-entering face of the workpiece when cutting was performed. Moreover, it was confirmed that the cutting stress (cutting torque) applied in the rotation direction of the drill was reduced by around 50% by arranging the resin sheet given in Reference Example 1-1 on the drill-entering face of the workpiece when cutting was conducted. Furthermore, it was confirmed that the cutting stress applied in the above-described perpendicular direction and rotation direction was reduced, the load to the drill was reduced, and the wear of the drill was reduced by 30% or more by arranging the resin sheet given in Reference Example 1-1 on the drill-entering face of the workpiece when cutting was performed. Ii is inferred that this contributes to the reduction of burrs (fluff) at the exit side of the processed hole and the reduction of interlayer peeling of the CFRP.

Moreover, it was confirmed that the uniformity of the inner diameter of holes to the running direction of the drill and the uniformity of the inner diameter of holes when the number of cut holes was increased were excellent by arranging the resin sheet given in Reference Example 1-1 on the drill-entering face of the workpiece when cutting was performed. From these results, it was understood that the wear of the drill was reduced by arranging the resin sheet on the drill-entering face of the workpiece, thereby making it possible to bore uniform and high-quality holes. It is inferred that this contributes to reduction of interlayer peeling of the CFRP because it is not necessary to push fastening elements by an excessive force when the CFRP is fixed to a structure using fastening elements such as bolts and rivets.

The results of Reference Examples 1-2 to 1-9 and Comparative Examples 1-2 to 1-6 in Table 1-4 are shown in Figure 1-5 to Figure 1-7 for every evaluation item. It was confirmed that the inner wall roughness of holes became small and the wear loss of the drill also became small by arranging the entry sheet given in Reference Examples 1-2 to 1-8 on the drill-entering face of the workpiece when cutting was performed. Moreover, it was confirmed that even when the aluminum foil alone given in Reference Example 1-9 was used, the inner wall roughness became similarly small and the wear loss of the drill also became small. The quality of cut holes in the CFRP was improved by making the inner wall roughness of holes small, and, furthermore, the number of holes that can be cut per one drill was able to be made large by making the wear loss of the drill small.

### <Evaluation Methods>

### 1) Measurement of Thrust Force and Cutting Torque

The thrust force and cutting torque were measured with a six-component dynamometer of Kyowa Electronic Instruments Co., Ltd. installed under the test piece holder of the workpiece (CFRP). The forces in the directions of the three axes and the moments in the directions of the three axes applied to the six-component dynamometer during the penetration of the drill in the CFRP test piece were measured, and the data were stored in a personal computer through an AD converter to measure the resistance and torque in the direction of the axis to the direction of the axis of the drill as the thrust force and the cutting torque respectively.

### 2) Measurement of Wear Loss of Drill

The image of the side face of the drill was acquired with a laser microscope (manufactured by KEYENCE COPORATION), and the wear volume was calculated by measuring, on the image, the cross-sectional area of wear in the flank of the edge of the drill blade, and the wear length in the flank of the drill is multiplied by the cross-sectional area of wear, thereby calculating the wear volume.

### 3) Measurement of Inner Diameter of Hole

The inner diameter of a hole of the CFRP was measured by a deviation from the standard test piece using an electric micrometer for measuring inner diameters with a resolution of 1·m. Inner diameters of holes are different at the entry portion, the center portion, and the exit portion in drilling, and therefore the inner diameters were measured at positions of 3 mm from the entry, 6.3 mm from the entry, and 9.5 mm from the entry in the plate thickness of 12.5 mm, and these are defined and measured as the inner diameter at the entry portion, the central portion, and the exit portion, respectively.

The specifications of the resin components, solid lubricant, metal foils, workpieces, cutting tools, and so on that were used in Reference Examples 2-1 to 2-4, 2-8 and 2-9, Examples 2-5 to 2-7 and Comparative Examples 2-1 to 2-3 are shown in Table 2-1.

**[Table 2-1]**

| Category | Name | Product name/model number | Manufacturer | Notes |
|---|---|---|---|---|
| Resin components | Polyethylene oxide | Altop R150 | Meisei Chemical Works, Ltd. | Mw= 150,000 |
| | Polyethylene glycol | PEG4000S | NOF CORPORATION | Mw=4,000 |
| | Polyethylene glycol/polypropylene glycol copolymer | Blaunon P 174 | Aoki Oil Industrial Co., Ltd. | Liquid at 20°C |
| Solid lubricant | Graphite | X-100 | Ito Graphite Co., Ltd. | Scaly, average particle diameter = 60 µm |
| Metal foil | Aluminum foil | 1N30-H18 | Mitsubishi Aluminum Co., Ltd. | Thickness: 0.15 mm |
| Workpiece | Titanium alloy plate | - | - | Thickness: 3 mmt, material equivalent to that for air craft use (TI6AL4VELI) |
| | Aluminum alloy plate | - | - | Thickness: 25 mmt, material equivalent to that for air craft use (TI6AL4VELI) |
| | Carbon fiber reinforced plastic | | | Thickness: 4 mmt, pseudo isotropic lamination Material equivalent to that for air craft use (UD material) |
| Cemented carbide drills | Non-coated drill | - | - | Diameter: 6.0 mmφ, tip angle: 120°, twist angle: 40°, without surface coating |
| | Diamond-coated drill | - | - | Diameter: 6.0 mmφ, tip angle: 120°, twist angle: 40°, with surface diamond coating |
| Boring apparatus | Machining center | M-V5B | Mitsubishi Electric Corporation | - |
| Cutting oil | Universal type water soluble cutting oil agent | SOLEX SM-70 | SOTANIOIL. CO.,LTD | Used in 10 fold dilution |

### <Evaluation Method of Wear Loss of Drill>

The wear loss of the drill in Reference Examples 2-1 to 2-4, 2-8 and 2-9, Examples 2-5 to 2-7 and Comparative Examples of 2-1 to 2-3 was evaluated in the following manner.

### (1) Residual Area of Cutting Edge of Drill Tip

After the dirt such as cut chips adhered to the drill tip portion was removed, the drill tip after boring was photographed using a V-LASER microscope (VK-9600, manufactured by KEYENCE CORPORATION). Next, the area of portions where the wear did not occur in the second face and the third face of the drill cutting edge when the observation was conducted from the direction of the drill tip was calculated using an analyzing software (VK_Analyzer version 1.2.0.2, produced by KEYENCE CORPORATION) to be determined as the residual area of the cutting edge of the drill tip.

### (2) Residual Amount of Cutting Edge Relative to New Drill

The residual amount of the cutting edge relative to a new drill tip was defined as the residual ratio of the area of portions where the wear did not occur to the cutting edge of the drill after cutting when the area of cutting edge of a new drill was assumed to be 100.

### <Preparation Example of Entry Sheet>

### (Preparation of Sheet 2-A)

Using a bidirectional kneader, 40 parts by weight of polyethylene oxide (Altop MG150, manufactured by Meisei Chemical Works, Ltd.), 50 parts by weight of polyethylene glycol (PEG4000S, manufactured by Sanyo Chemical Industries, Ltd.), and 10 parts by weight of polyethylene glycol/polypropylene glycol copolymer (Blaunon P174, manufactured by Aoki Oil Industrial Co., Ltd.) were kneaded in a nitrogen atmosphere at a temperature of 150°C to obtain a kneaded material. A resin sheet having a thickness of 0.2 mm was prepared by molding the obtained kneaded material with an extruder. Five resin sheets obtained above were overlaid, and laminated and integrated by heat lamination at a temperature of 150°C using a lamination apparatus (OHL-2400, manufactured by ONC Inc.) to prepare Sheet 2-A as an entry sheet.

### (Preparation of Sheet 2-B)

Using a bidirectional kneader, 40 parts by weight of polyethylene oxide (Altop MG150, manufactured by Meisei Chemical Works, Ltd.), 50 parts by weight of polyethylene glycol (PEG4000S, manufactured by Sanyo Chemical Industries, Ltd.), and 10 parts by weight of polyethylene glycol/polypropylene glycol copolymer (Blaunon P174, manufactured by Aoki Oil Industrial Co., Ltd.) were kneaded in a nitrogen atmosphere at a temperature of 150°C to obtain a kneaded material. A resin sheet having a thickness of 0.2 mm was prepared by molding the obtained kneaded material with an extruder. An aluminum foil having a thickness of 0.15 mm (1N30-H18, manufactured by Mitsubishi Aluminum Co., Ltd.) the one face of which a polyester-based resin layer (Vylonal MD-1200, manufactured by Toyobo Co., Ltd) having a thickness of 0.01 mm was formed as an adhesive layer was separately prepared. On the aluminum foil on which the adhesive layer was formed, 5 resin sheets prepared above were overlaid, and, on the uppermost portion thereof, the same aluminum foil as prepared above was further laminated. In laminating the aluminum foil, the resin sheet and the aluminum foil were arranged so that the resin sheet and the adhesive layer on the surface of the aluminum foil contacted each other, and the resin sheet and the aluminum foil were laminated and integrated by heat lamination at a temperature of 150°C using a lamination apparatus (OHL-2400, manufactured by ONC Inc.) to prepare Sheet 2-B as an entry sheet.

### (Preparation of Sheet 2-C)

Using a bidirectional kneader, 10 parts by weight of polyethylene oxide (Altop MG150, manufactured by Meisei Chemical Works, Ltd.), 40 parts by weight of polyethylene glycol (PEG4000S, manufactured by Sanyo Chemical Industries, Ltd.), and 50 parts by weight of graphite (X-100, manufactured by Ito Graphite Co., Ltd.) were kneaded in a nitrogen atmosphere at a temperature of 150°C to obtain a kneaded material. A resin sheet having a thickness of 0.2 mm was prepared by molding the obtained kneaded material with an extruder. An aluminum foil having a thickness of 0.15 mm (1N30-H18, manufactured by Mitsubishi Aluminum Co., Ltd.) the one face of which a polyester-based resin layer (Vylonal MD-1200, manufactured by Toyobo Co., Ltd) having a thickness of 0.01 mm was formed as an adhesive layer was separately prepared. On the aluminum foil on which the adhesive layer was formed, 5 resin sheets prepared above were overlaid, and, on the uppermost portion thereof, the same aluminum foil as prepared above was further laminated. In laminating the aluminum foil, the resin sheet and the aluminum foil were arranged so that the resin sheet and the adhesive layer on the surface of the aluminum foil contacted each other, and the resin sheet and the aluminum foil were laminated and integrated by heat lamination at a temperature of 150°C using a lamination apparatus (OHL-2400, manufactured by ONC Inc.) to prepare Sheet 2-C as an entry sheet.

### (Preparation of Sheet 2-D)

Using a bidirectional kneader, 10 parts by weight of polyethylene oxide (Altop MG150, manufactured by Meisei Chemical Works, Ltd.), 40 parts by weight of polyethylene glycol (PEG4000S, manufactured by Sanyo Chemical Industries, Ltd.), and 50 parts by weight of graphite (X-100, manufactured by Ito Graphite Co., Ltd.) were kneaded in a nitrogen atmosphere at a temperature of 150°C to obtain a kneaded material. A resin sheet having a thickness of 0.2 mm was prepared by molding the obtained kneaded material with an extruder. An aluminum foil having a thickness of 0.15 mm (1N30-H18, manufactured by Mitsubishi Aluminum Co., Ltd.) the one face of which a polyester-based resin layer (Vylonal MD-1200, manufactured by Toyobo Co., Ltd) having a thickness of 0.01 mm was formed as an adhesive layer was separately prepared. On the aluminum foil on which the adhesive layer was formed, 15 resin sheets prepared above were overlaid, and, on the uppermost portion thereof, the same aluminum foil as prepared above was further laminated. In laminating the aluminum foil, the resin sheet and the aluminum foil were arranged so that the resin sheet and the adhesive layer on the surface of the aluminum foil contacted each other, and the resin sheet and the aluminum foil were laminated and integrated by heat lamination at a temperature of 150°C using a lamination apparatus (OHL-2400, manufactured by ONC Inc.) to prepare Sheet 2-D as an entry sheet.

### <Reference Example 2-1 to 2-4, 2-8 and 2-9 and Examples 2-5 to 2-7>

Each entry sheet prepared in the manner as described above was fixed on the cutting tool (cemented carbide drill)-entering face of the workpiece with a jig, and boring was performed under the conditions shown in Table 2-2. In addition, with respect to Reference Example 2-2 to 2-4, 2-8 and 2-9, and Examples 2-5 to 2-7, the entry sheet was arranged so that the aluminum foil of the entry sheet contacted the cutting face of the workpiece. The wear loss of the drill after boring was evaluated. The evaluation results are shown in Table 2-3. Moreover, with respect to Examples 2-5 to 2-7, cutting (air-cooled cutting) was performed while supplying the air compressed with a compressor and having a temperature of 25°C from a position 300 mm apart from the cutting portion to the cutting portion at 155 L/min using a nozzle having a cross-sectional area at the nozzle tip of 31.7 mm². In addition, a titanium alloy plate and a carbon fiber reinforced plastic (CFRP) as the objects of cutting were overlaid so as to contact each other, and cutting was performed arranging the CFRP so as to be on the side nearer to the cutting tool-entering side than the titanium alloy plate in Reference Example 2-9.

### <Comparative Example 2-1 to 2-2>

Boring was performed in the same manner as in Reference Examples 2-3 to 2-4 except that an entry sheet was not arranged on the cutting face of the workpiece. Boring conditions are described in Table 2-2. The wear loss of the drill was evaluated in the same manner as in Reference Examples 2-3 to 2-4. The evaluation results are shown in Table 2-3.

### <Comparative Example 2-3>

Boring was performed in the same manner as in Reference Example 2-4 except that an entry sheet was not arranged on the cutting face of the workpiece and except that processing (cutting with a cutting oil) was performed using a cutting oil. Boring conditions are described in Table 2-2. The wear loss of the drill was evaluated in the same manner as in Reference Example 2-4. The evaluation results are shown in Table 2-3. In addition, the cutting with a cutting oil is defined as cutting that is performed while continuously supplying the cutting oil to the drill and the boring portion at a flow rate of 18 L/min when cutting is performed.

**[Table 2-2]**

| | Entry sheet | Workpiece | Kind of drill | Drill diameter | Number of cut holes | Number of revolutions | Feed rate | Cutting method |
|---|---|---|---|---|---|---|---|---|
| | | | | [mmφ] | [Holes] | [rpm] | [mm/min] | |
| Reference Example 2-1 | Sheet 2-A | Titanium alloy plate | Diamond-coated drill | 6 | 100 | 500 | 25 | - |
| Reference Example 2-2 | Sheet 2-B | Titanium alloy plate | Diamond-coated drill | 6 | 100 | 500 | 25 | - |
| Example 2-3 | Sheet 2-C | Titanium alloy plate | Diamond-coated drill | 6 | 100 | 500 | 25 | - |
| Example 2-4 | Sheet 2-C | Titanium alloy plate | Non-coated drill | 6 | 100 | 500 | 25 | - |
| Example 2-5 | Sheet 2-C | Titanium alloy plate | Diamond-coated drill | 6 | 100 | 500 | 25 | Air-cooled cutting |
| Example 2-6 | Sheet 2-C | Titanium alloy plate | Non-coated drill | 6 | 100 | 500 | 25 | Air-cooled cutting |
| Example 2-7 | Sheet 2-D | Titanium alloy plate | Non-coated drill | 6 | 100 | 500 | 25 | Air-cooled cutting |
| Example 2-8 | Sheet 2-C | Aluminum alloy plate | Non-coated drill | 6 | 100 | 720 | 14.4 | - |
| Example 2-9 | Sheet 2-C | CFRP + Titanium alloy plate | Non-coated drill | 6 | 100 | 500 | 25 | - |
| Comparative Example 2-1 | Not used | Titanium alloy plate | Diamond-coated drill | 6 | 100 | 500 | 25 | - |
| Comparative Example 2-2 | Not used | Titanium alloy plate | Non-coated drill | 6 | 100 | 500 | 25 | - |
| Comparative Example 2-3 | Not used | Titanium alloy plate | Non-coated drill | 6 | 100 | 500 | 25 | Processing with cutting oil |

| | | | | | | | | |
|---|---|---|---|---|---|---|---|---|
| Examples 2-3, 2-4, 2-8 and 2-9 are Reference Examples | | | | | | | | |

**[Table 2-3]**

| | Entry sheet | Workpiece | Kind of drill | Residual area of cutting edge of drill tip | Residual amount of cutting edge relative to new drill |
|---|---|---|---|---|---|
| | | | | [mm²] | [%] |
| New drill-1 | - | - | Non-coated drill | 11.82 | 100.0 |
| New drill-1 | - | - | Diamond-coated drill | 11.79 | 100.0 |
| Reference Example 2-1 | Sheet 2-A | Titanium alloy plate | Diamond-coated drill | 7.21 | 61.2 |
| Reference Example 2-2 | Sheet 2-B | Titanium alloy plate | Diamond-coated drill | 7.79 | 66.1 |
| Example 2-3 | Sheet 2-C | Titanium alloy plate | Diamond-coated drill | 9.86 | 83.6 |
| Example 2-4 | Sheet 2-C | Titanium alloy plate | Non-coated drill | 10.22 | 86.4 |
| Example 2-5 | Sheet 2-C | Titanium alloy plate | Diamond-coated drill | 9.83 | 83.4 |
| Example 2-6 | Sheet 2-C | Titanium alloy plate | Non-coated drill | 7.59 | 64.2 |
| Example 2-7 | Sheet 2-D | Titanium alloy plate | Non-coated drill | 9.27 | 78.4 |
| Example 2-8 | Sheet 2-C | Aluminum alloy plate | Non-coated drill | 11.56 | 97.8 |
| Example 2-9 | Sheet 2-C | CFRP + Titanium alloy plate | Non-coated drill | 11.02 | 93.3 |
| Comparative Example 2-1 | Not used | Titanium alloy plate | Diamond-coated drill | 4.90 | 41.6 |
| Comparative Example 2-2 | Not used | Titanium alloy plate | Non-coated drill | 6.01 | 51.0 |
| Comparative Example 2-3 | Not used | Titanium alloy plate | Non-coated drill | 0.59 | 5.0 |

| | | | | | |
|---|---|---|---|---|---|
| Examples 2-3, 2-4, 2-8 and 2-9 are Reference Examples | | | | | |

Photographs of a drill tip after boring in Reference Examples 2-1 to 2-4, 2-8 and 2-9, Examples 2-5 to 2-7 and Comparative Examples 2-1 to 2-3 in Table 2-2 are shown in Figures 2-1 to 2-3. Moreover, the residual amount of the cutting edge of the drill when the area of the cutting edge of a new drill is assumed to be 100 is shown in Figure 2-4. It was understood that when boring was performed, the residual amount of the cutting edge was 64 to 98% by using the entry sheets made of the resin sheets given in Reference Examples 2-1 to 2-4, 2-8 and 2-9 and Examples 2-5 to 2-7, which was larger than the residual amount of the cutting edge of 5 to 51% in the case where the resin sheet was not used. From these numerical values, it was understood that the entry sheets made of the resin sheets given in Reference Examples 2-1 to 2-4, 2-8 and 2-9 and Examples 2-5 to 2-7 had a great effect on suppressing the wear of the drill.

The specifications of the resin components, the solid lubricant, the metal foil, the workpiece, the cutting tool, and so on that were used in Reference Example 3-1 and Examples 3-2 to 3-4 and Comparative Examples 3-1 to 3-2 are shown in Table 3-1.

**[Table 3-1]**

| Category | Name | Product name/model number | Manufacturer | Notes |
|---|---|---|---|---|
| Workpiece | Titanium alloy plate | - | - | Thickness: 3 mmt, material equivalent to that for air craft use (TI6AL4VELI) |
| Resin components | Polyethylene oxide | Altop R150 | Meisei Chemical Works, Ltd. | Mw=150,000 |
| | Polyethylene glycol | PEG4000S | NOF CORPORATION | Mw=4,000 |
| Solid lubricant | Graphite | X-100 | Ito Graphite Co., Ltd. | Scaly, average particle diameter = 60 µm |
| Metal foil | Aluminum foil | 1N30-H18 | Mitsubishi Aluminum Co., Ltd. | Thickness: 0.15 mm |
| Cemented carbide drills | Non-coated drill | - | - | Diameter: 6.0 mmφ, tip angle: 120°, twist angle: 40°, without surface coating |
| Boring apparatus | Machining center | M-V5B | Mitsubishi Electric Corporation | - |
| Cutting oil | Universal type water soluble cutting oil agent | SOLEX SM-70 | SOTANIOIL. CO.,LTD | Used in 10 fold dilution |

Moreover, in Reference Example 3-1 and Examples 3-2 to 3-4, the burr height around cut holes on the drill exit side and the wear loss of the drill (the residual area of the cutting edge of the drill tip and the residual amount of the cutting edge relative to a new drill) were evaluated in the following manner.

### (1) Burr Height around Cut Holes at Drill Exit Side

The drill exit face of through holes after cutting was photographed using a V-LASER microscope (VK-9700, manufactured by KEYENCE CORPORATION). From the photographed data, the burr height around the cut holes on the drill exit side was measured using an analyzing software (VK_Analyzer version1.2.0.2, produced by KEYENCE CORPORATION). In measuring the burr height, the burr height was measured at randomly selected 10 points to determine the maximum value, the average value, and the standard deviation.

### (2) Residual Area of Cutting Edge of Drill Tip

After the dirt such as cut chips adhered to the drill tip portion was removed, the drill tip after boring was photographed using a V-LASER microscope (VK-9600, manufactured by KEYENCE CORPORATION). Next, the area of portions where the wear did not occur in the second face and the third face of the drill cutting edge when the observation was conducted from the direction of the drill tip was calculated using an analyzing software (VK_Analyzer version 1.2.0.2, produced by KEYENCE CORPORATION) to be determined as the residual area of the cutting edge of the drill tip.

### (3) Residual Amount of Cutting Edge Relative to New Drill

The residual amount of the cutting edge relative to a new drill tip was defined as the residual ratio of the area of portions where the wear did not occur to the cutting edge of the drill after cutting when the area of cutting edge of a new drill was assumed to be 100.

### <Reference Example 3-1>

Boring of a titanium alloy plate (material equivalent to that for air craft use (TI6AL4VELI)) having a thickness of 3.0 mm was continuously performed under the condition of 100 holes per 1 drill using a drill having a diameter of 6 mm (tip angle: 120°, twist angle: 40°, without surface coating). In boring the titanium alloy plate, boring (air-cooled boring) was performed while supplying the air compressed with a compressor and having a temperature of 25°C from a position 300 mm apart from the boring portion to the boring portion at 155 L/min using a nozzle having a cross-sectional area at the nozzle tip of 31.7 mm². Boring was performed under the processing conditions shown in Table 3-2, and the maximum value of the burr height around the bored hole on the drill exit side of the titanium alloy plate after boring was measured for every number of bored holes. The measurement results are shown in Table 3-3. Moreover, the maximum value, average value, and standard deviation of the burr height at the 10th, 50th, and 100th hole are shown in Table 3-4.

### <Example 3-2>

Using a bidirectional kneader, 10 parts by weight of polyethylene oxide (Altop MG150, manufactured by Meisei Chemical Works, Ltd.), 40 parts by weight of polyethylene glycol (PEG4000S, manufactured by Sanyo Chemical Industries, Ltd.), and 50 parts by weight of graphite (X-100, manufactured by Ito Graphite Co., Ltd.) were kneaded in a nitrogen atmosphere at a temperature of 150°C to obtain a kneaded material. A resin sheet having a thickness of 0.2 mm was prepared by molding the obtained kneaded material with an extruder. An aluminum foil having a thickness of 0.15 mm (1N30-H18, manufactured by Mitsubishi Aluminum Co., Ltd.) the one face of which a polyester-based resin layer (Vylonal MD-1200, manufactured by Toyobo Co., Ltd) having a thickness of 0.01 mm was formed as an adhesive layer was separately prepared. On the aluminum foil on which the adhesive layer was formed, 5 resin sheets prepared above were overlaid, and, on the uppermost portion thereof, the same aluminum foil as prepared above was further laminated. In laminating the aluminum foil, the resin sheet and the aluminum foil were arranged so that the resin sheet and the adhesive layer on the surface of the aluminum foil contacted each other, and the resin sheet and the aluminum foil were laminated and integrated by heat lamination at a temperature of 150°C using a lamination apparatus (OHL-2400, manufactured by ONC Inc.) to prepare Sheet 3-A as an entry sheet.

The obtained Sheet 3-A was arranged on the drill-entering face of the titanium alloy plate, boring was performed under the same conditions as in Reference Example 3-1, and the maximum value of the burr height around the bored holes on the drill exit side of the titanium alloy plate after boring was measured for every number of bored holes. The measurement results are shown in Table 3-3. Moreover, the maximum value, average value, and standard deviation of the burr height at the 10th, 50th, and 100th hole are shown in Table 3-4. Furthermore, the evaluation results of the wear loss of the drill after boring 100 holes are shown in Table 3-5.

### <Example 3-3>

Sheet 3-A was prepared in the same manner as in Example 3-2. The obtained Sheet 3-A was arranged on the drill-entering face of a titanium alloy plate (material equivalent to that for air craft use (TI6AL4VELI)) having a thickness of 3.0 mm. Boring of the titanium alloy plate on which Sheet 3-A was arranged was continuously performed under the condition of 100 holes per 1 drill using a drill having a diameter of 6 mm (tip angle: 120°, twist angle: 40°, without surface coating). In boring the titanium alloy plate, boring (air-cooled boring) was performed while supplying the air compressed with a compressor and having a temperature of -3.5°C from a position 300 mm apart from the boring portion to the boring portion at 155 L/min using a nozzle having a cross-sectional area at the nozzle tip of 31.7 mm². Boring was performed under the processing conditions shown in Table 3-2, and the maximum value of the burr height around the bored hole on the drill exit side of the titanium alloy plate after boring was measured for every number of bored holes. The measurement results are shown in Table 3-3. Moreover, the maximum value, average value, and standard deviation of the burr height at the 10th, 50th, and 100th hole are shown in Table 3-4.

### <Example 3-4>

Sheet 3-A was prepared in the same manner as in Example 3-2. The obtained Sheet 3-A was arranged on the drill-entering face of a titanium alloy plate (material equivalent to that for air craft use (TI6AL4VELI)) having a thickness of 3.0 mm. Boring of the titanium alloy plate on which Sheet 3-A was arranged was continuously performed under the condition of 100 holes per 1 drill using a drill having a diameter of 6 mm (tip angle: 120°, twist angle: 40°, without surface coating). In boring the titanium alloy plate, boring (air-cooled boring) was performed while supplying the air compressed with a compressor and having a temperature of -25.5°C from a position 300 mm apart from the boring portion to the boring portion at 155 L/min using a nozzle having a cross-sectional area at the nozzle tip of 31.7 mm². Boring was performed under the processing conditions shown in Table 3-2, and the maximum value of the burr height around the bored hole on the drill exit side of the titanium alloy plate after boring was measured for every number of bored holes. The measurement results are shown in Table 3-3. Moreover, the maximum value, average value, and standard deviation of the burr height at the 10th, 50th, and 100th hole are shown in Table 3-4.

### <Comparative Example 3-1>

Boring was performed in the same manner as in Reference Example 3-1 except that the air was not supplied to the boring portion when boring of a titanium alloy plate (material equivalent to that for air craft use (TI6AL4VELI)) having a thickness of 3.0 mm was performed. The maximum value of the burr height around the bored holes on the drill exit side of the titanium alloy plate after boring was measured for every number of bored holes. The measurement results are shown in Table 3-3. Moreover, the maximum value, average value, and standard deviation of the burr height at the 10th, 50th, and 100th hole are shown in Table 3-4. Furthermore, the evaluation results of the wear loss of the drill after boring 100 holes are shown in Table 3-5.

### <Comparative Example 3-2>

Boring was performed in the same manner as in Reference Example 3-1 while supplying a cutting oil (SOLEX SM-70, manufactured by SOTANI OIL. CO., LTD.) in place of supplying the air to the boring portion when a titanium alloy plate (material equivalent to that for air craft use (TI6AL4VELI)) having a thickness of 3.0 mm was processed. The maximum value of the burr height around the bored hole on the drill exit side of the titanium alloy plate after boring was measured for every number of bored holes. The measurement results are shown in Table 3-3. Moreover, the maximum value, average value, and standard deviation of the burr height at the 10th, 50th, and 100th hole are shown in Table 3-4. Furthermore, the evaluation results of the wear loss of the drill after boring 100 holes are shown in Table 3-5.

**[Table 3-2]**

| | Air-cooled boring | Workpiece | Kind of drill | Entry sheet | Drill diameter | Number of bored holes | Number of revolutions | Feed rate |
|---|---|---|---|---|---|---|---|---|
| | | | | | [mmφ] | [Holes] | [kpm] | [mm/min] |
| Reference Example 3-1 | Air blow at 25°C | Titanium alloy plate | Non-coated drill | - | 6 | 100 | 500 | 25 |
| Example 3-2 | Air blow at 25°C | Titanium alloy plate | Non-coated drill | Sheet 3-A | 6 | 100 | 500 | 25 |
| Example 3-3 | Air blow at -3.5°C | Titanium alloy plate | Non-coated drill | Sheet 3-A | 6 | 100 | 500 | 25 |
| Example 3-4 | Air blow at -25.5°C | Titanium alloy plate | Non-coated drill | Sheet 3-A | 6 | 100 | 500 | 25 |
| Comparative Example 3-1 | Without air blow | Titanium alloy plate | Non-coated drill | - | 6 | 100 | 500 | 25 |
| Comparative Example 3-2 | Without air blow | Titanium alloy plate | Non-coated drill | - | 6 | 100 | 500 | 25 |

**[Table 3-3]**

| | Air-cooled boring | Entry sheet | Burr height [µm] maximum value | | | | | | | | | | | | |
|---|---|---|---|---|---|---|---|---|---|---|---|---|---|---|---|
| | | | 1st hole | 2nd hole | 3rd hole | 4th hole | 5th hole | 10th hole | 15th hole | 20th hole | 30th hole | 40th hole | 50th hole | 80th hole | 100th hole |
| Reference Example 3-1 | Air blow at 25°C | Not used | 100 | 150 | 300 | 350 | 299 | 100 | 50 | 150 | 100 | 199 | 99 | 50 | 149 |
| Example 3-2 | Air blow at 25°C | Sheet 3-A | 50 | 250 | 250 | 200 | 150 | 190 | 100 | 63 | 50 | 50 | 50 | 49 | 120 |
| Example 3-3 | Air blow at -3.5°C | Sheet 3-A | 40 | 210 | 200 | 180 | 160 | 110 | 50 | 45 | 40 | 45 | 45 | 50 | 45 |
| Example 3-4 | Air blow at -25.5°C | Sheet 3-A | 35 | 180 | 200 | 160 | 120 | 70 | 50 | 45 | 45 | 40 | 45 | 45 | 40 |
| Comparative Example 3-1 | Without air blow | Not used | 131 | 150 | 449 | 1100 | 1200 | 1011 | 1150 | 1050 | 1100 | 1079 | 1101 | 1200 | 1100 |
| Comparative Example 3-2 | Without air blow | Not used | 50 | 86 | 100 | 390 | 250 | 100 | 100 | 99 | 100 | 100 | 150 | 150 | 250 |

**[Table 3-4]**

| | Air-cooled boring | Entry sheet | Burr height [µm] maximum value, average value, and standard deviation | | | | | | | | |
|---|---|---|---|---|---|---|---|---|---|---|---|
| | | | 10th hole | | | 50th hole | | | 100th hole | | |
| | | | Maximum value | Average | Standard deviation | Maximum value | Average | Standard deviation | Maximum value | Average | Standard deviation |
| Reference Example 3-1 | Air blow at 25°C | Not used | 100 | 67.0 | 33.1 | 99 | 37.5 | 30.1 | 149 | 44.2 | 37.2 |
| Example 3-2 | Air blow at 25°C | Sheet 3-A | 190 | 64.7 | 51.5 | 50 | 35.0 | 17.9 | 120 | 42.0 | 29.7 |
| Example 3-3 | Air blow at -3.5°C | Sheet 3-A | 110 | 61.2 | 34.2 | 45 | 32.1 | 15.4 | 45 | 36.9 | 16.9 |
| Example 3-4 | Air blow at -25.5°C | Sheet 3-A | 70 | 59.8 | 31.2 | 45 | 30.7 | 13.6 | 40 | 35.1 | 15.7 |
| Comparative Example 3-1 | Without air blow | Not used | 1011 | 666.0 | 257.6 | 1101 | 999.5 | 164.4 | 1100 | 1083.1 | 20.7 |
| Comparative Example 3-2 | Without air blow | Not used | 100 | 69.0 | 23.0 | 150 | 101.5 | 31.8 | 250 | 128.9 | 74.5 |

**[Table 3-5]**

| | Air-cooled boring | Entry sheet | Wear of drill tip | |
|---|---|---|---|---|
| | | | Residual area of cutting edge of drill tip [mm²] | Residual amount of cutting edge relative to new drill [%] |
| New drill | - | - | 11.82 | 100.0 |
| Reference Example 3-1 | Air blow at 25°C | Not used | - | - |
| Example 3-2 | Air blow at 25°C | Sheet 3-A | 7.59 | 64.2 |
| Example 3-3 | Air blow at -3.5°C | Sheet 3-A | - | - |
| Example 3-4 | Air blow at -25.5°C | Sheet 3-A | - | - |
| Comparative Example 3-1 | Without air blow | Not used | 2.70 | 22.8 |
| Comparative Example 3-2 | Without air blow | Not used | 0.59 | 5.0 |

Photographs of burrs around the bored hole on the drill exit side of the titanium alloy plate after processing in Reference Example 3-1, Examples 3-2 to 3-4, and Comparative Examples 3-1 to 3-2 are shown in Figure 3-1, and the measured burr heights are shown in Table 3-3 and Figure 3-2. Moreover, photographs of the drill tip after boring in Example 3-2, Comparative Example 3-1, and Comparative Example 3-2 are shown in Figure 3-3. From Reference Example 3-1, it was understood that the burr height around the bored holes on the drill exit side of the titanium alloy plate was reduced by performing boring under cooling with a gas when boring was performed. Moreover, from Example 3-2, it was understood that the burr height was further reduced when processing was performed further arranging the entry sheet on the drill-entering face when boring was performed under cooling with a gas. On the other hand, in Comparative Example 3-1 where boring was performed without conducting cooling with a gas, the burr height exceeded 1000 µm. This value was a numerical value up to 20 times larger as compared with the case where boring was performed under cooling with a gas. From these facts, it was understood that the heat accumulation of the titanium alloy plate during boring was reduced by performing boring under cooling with a gas and, as a result, through holes were formed without the expansion of the metal around the processed holes on the drill exit side

On the other hand, in the case where the cutting oil was used as in Comparative Example 3-2, the burr at the drill exit of the titanium plate alloy was suppressed similar to the boring in which cooling with a gas was conducted. However, it was understood that the standard deviation of the burr height became large as compared with boring in which cooling with a gas was conducted. Furthermore, the titanium alloy plate was contaminated by the cutting oil after boring, and therefore cleaning with a solvent was essential.

Furthermore, from Example 3-2, it was understood that the burr at the drill exit of the titanium plate alloy was suppressed and there was also an effect of suppressing the wear of the drill in the case where the entry sheet was used in addition to cooling with a gas. It is considered that this is due to the lubricity of the resin composition of the entry sheet. Specifically, it is considered that the lubricity between the drill surface including the drill groove surface and the inside of the processed hole is enhanced, the discharge of difficult-to-cut particles in a difficult-to-cut metal to be cut by the drill blade is made easy, and the frequency and degree of rubbing with the drill blade can be reduced by the existence of the resin composition, and therefore, as a result, the wear of the drill blade is reduced. From Comparative Example 3-2, it was understood that the lubricating effect was poor and therefore the wear of the drill tip progressed in the case where the cutting oil was simply used.

### Industrial Applicability

By the method for cutting of the present invention (for example, boring) a fiber reinforced composite material (for example, the CFRP) using the above described entry sheet, a favorable hole quality can be obtained as compared with the conventional machining where a favorable hole quality has not been obtained for the difficult-to-cut materials, and it is possible to prolong the lifetime of drills for processing. Thus, the method of the present invention can effectively be applied to the CFRP that has been attracting attention recently as a structure material for air crafts, and therefore an increase in the use of the CFRP is expected, and the industrial applicability is extremely high.

Moreover, the method for cutting of the present invention (for example, boring) a metal using the entry sheet can prolong the lifetime of drills as compared with conventional machining where the number of holes that can be processed per one drill has been small for the difficult-to-cut material. Further, in the conventional wet processing, the productivity is lowered due to the contamination of the workpiece or the load against a cleaning process, however, in the present invention, dry processing is made possible and processing costs can be reduced by performing processing using the entry sheet, and therefore the industrial applicability is extremely high.

Furthermore, the method for cutting (for example, boring) a fiber reinforced composite material and/or a metal using the cutting method of the present invention leads to an improvement in productivity as compared with the conventional wet cutting. In the conventional wet processing, the productivity is lowered due to the contamination of the workpiece or the load against a cleaning process, however, in the cutting method of the present invention, dry processing is made possible and processing costs can be reduced by using air-cooled processing, or using air-cooled processing and the entry sheet together, and therefore the industrial applicability is extremely high.

## Claims

1. A cutting method for cutting a fiber reinforced composite material and/or a metal using an entry sheet which comprises a resin sheet comprising a solid lubricant selected from the group consisting of graphite, molybdenum disulfide, tungsten disulfide, molybdenum compounds, polytetrafluoroethylenes and polyimides, **characterized in that**
the fiber reinforced composite material comprises a carbon fiber reinforced plastic,
the metal comprises a titanium alloy or an aluminum alloy,
the cutting is performed while cooling a cutting portion and/or a cutting tool using a gas,
an amount of the gas supplied to the cutting portion and/or the cutting tool is 5 to 300 L/min,
a gas outlet area in an apparatus for supplying the gas is 7 mm² to 2000 mm², and
a distance between a gas outlet of the apparatus for supplying the gas and the cutting portion and/or the cutting tool is 100 mm to 500 mm.

2. The method according to claim 1, wherein the resin sheet comprises a water soluble resin.

3. The method according to claim 1 or 2, wherein the resin sheet comprises a water insoluble resin.

4. The method according to any one of claims 1 to 3, wherein the resin sheet comprises two or more resin composition layers.

5. The method according to any one of claims 1 to 4, wherein the resin sheet has a thickness of 0.1 mm or more and 20 mm or less.

6. The method according to any one of claims 1 to 5, wherein at least one face of the resin sheet comprises a metal foil.

7. The method according to claim 6, wherein an adhesive layer is formed between the metal foil and the resin sheet.

8. The method according to claim 7, wherein the adhesive layer is a resin coating.

9. The method according to any one of claims 1 to 8, wherein a sticky layer is formed on a face that contacts the fiber reinforced composite material and/or the metal .

10. The method according to any one of claims 1 to 9, wherein the entry sheet comprises a metal.

11. The cutting method according to any one of claims 1 to 10, wherein cutting is performed arranging the entry sheet on a cutting tool-entering face in the fiber reinforced composite material and/or the metal to be cut.

12. The cutting method according to any one of claims 1 to 11, wherein the cutting is boring.

13. The cutting method according to any one of claims 1 to 12, wherein the entry sheet comprises an aluminum foil.

14. The cutting method according to any one of claims 1 to 13, wherein the cutting is performed while cooling a cutting portion and/or a cutting tool using a gas having a temperature of 30°C or lower.

15. The cutting method according to any one of claims 1 to 14, wherein the cutting tool used for cutting is a drill made of a cemented carbide.

16. The cutting method for cutting a metal according to any one of claims 1 to 15, wherein the cutting is processing for forming a through hole in the fiber reinforced composite material and/or the metal.

17. The cutting method according to any one of claims 1 to 16, wherein a content of moisture contained in the gas supplied to the cutting portion and/or the cutting tool is 20 g/m³ or less.

18. The cutting method according to any one of claims 1 to 17, wherein a content of oil contained in the gas supplied to the cutting portion and/or the cutting tool is 10 mg/m³ or less.

19. The cutting method according to any one of claims 1 to 18, wherein an object to be cut is a material obtained by overlaying a metal which comprises a titanium alloy or an aluminum alloy and a fiber reinforced composite material which comprises a carbon fiber reinforced plastic so as to contact each other, and the cutting is performed arranging the fiber reinforced composite material so as to be on a side nearer to a cutting tool-entering side than the metal.

20. A method for producing a fiber reinforced composite material, comprising a step of cutting a fiber reinforced composite material which comprises a carbon fiber reinforced plastic by the cutting method according to any one of claims 1 to 19.

21. A method for producing a metal, comprising a step of cutting a metal which comprises a titanium alloy or an aluminum alloy by the cutting method according to any one of claims 1 to 19.

## Patentansprüche

1. Zerspanungsverfahren zum Zerspanen eines faserverstärkten Verbundmaterials und/oder eines Metalls unter Verwendung eines Eintrittsfolie, die eine Harzfolie, umfassend ein festes Schmiermittel, ausgewählt aus der Gruppe, bestehend aus Graphit, Molybdändisulfid, Wolframdisulfid, Molybdänverbindungen, Polytetrafluorethylenen und Polyimiden, umfasst, **dadurch gekennzeichnet, dass**
das faserverstärkte Verbundmaterial ein kohlenstofffaserverstärkter Kunststoff ist,
das Metall eine Titanlegierung oder eine Aluminiumlegierung umfasst,
das Zerspanen unter Kühlung eines Zerspanungsabschnitts und/oder eines Zerspanungswerkzeugs unter Verwendung eines Gases durchgeführt wird,
eine Menge des Gases, das dem Zerspanungsabschnitt und/dem Zerspanungswerkzeug zugeführt wird, 5 bis 300 L/min beträgt,
eine Gasaustrittsfläche in einer Vorrichtung zur Zuführung des Gases 7 mm² bis 2.000 mm² beträgt und
ein Abstand zwischen einem Gasaustritt der Vorrichtung zur Zuführung des Gases und dem Zerspanungsabschnitt und/oder dem Zerspanungswerkzeug 100 mm bis 500 mm beträgt.

2. Verfahren gemäß Anspruch 1, worin die Harzfolie ein wasserlösliches Harz umfasst.

3. Verfahren gemäß Anspruch 1 oder 2, worin die Harzfolie ein wasserunlösliches Harz umfasst.

4. Verfahren gemäß einem der Ansprüche 1 bis 3, worin die Harzfolie zwei oder mehr Harzzusammensetzungsschichten umfasst.

5. Verfahren gemäß einem der Ansprüche 1 bis 4, worin die Harzfolie eine Dicke von 0,1 mm oder mehr und 20 mm oder weniger aufweist.

6. Verfahren gemäß einem der Ansprüche 1 bis 5, worin mindestens eine Fläche der Harzfolie eine Metallfolie umfasst.

7. Verfahren gemäß Anspruch 6, wobei eine Klebstoffschicht zwischen der Metallfolie und der Harzfolie gebildet ist.

8. Verfahren gemäß Anspruch 7, worin die Klebstoffschicht eine Harzbeschichtung ist.

9. Verfahren gemäß einem der Ansprüche 1 bis 8, worin eine klebrige Schicht auf einer Fläche gebildet ist, die das faserverstärkte Verbundmaterial und/oder das Metall kontaktiert.

10. Verfahren gemäß einem der Ansprüche 1 bis 9, worin die Eintrittsfolie ein Metall umfasst.

11. Zerspanungsverfahren gemäß einem der Ansprüche 1 bis 10, worin eine Zerspanung durchgeführt wird, wobei die Eintrittsfolie auf einer Fläche des zu zerspanenden faserverstärkten Verbundmaterials und/oder des Metalls, in die das Zerspanungswerkzeug eintritt, angeordnet ist.

12. Zerspanungsverfahren gemäß einem der Ansprüche 1 bis 11, worin das Zerspanen Bohren ist.

13. Zerspanungsverfahren gemäß einem der Ansprüche 1 bis 12, worin die Eintrittsfolie eine Aluminiumfolie umfasst.

14. Zerspanungsverfahren gemäß einem der Ansprüche 1 bis 13, worin das Zerspanen unter Kühlung eines Zerspanungsabschnitts und/oder eines Zerspanungswerkzeugs unter Verwendung eines Gases mit einer Temperatur von 30°C oder niedriger durchgeführt wird.

15. Zerspanungsverfahren gemäß einem der Ansprüche 1 bis 14, worin das zur Zerspanung verwendete Zerspanungswerkzeug ein Bohrer aus einem Hartmetall ist.

16. Zerspanungsverfahren zum Zerspanen eines Metalls gemäß einem der Ansprüche 1 bis 15, worin das Zerspanen ein Vorgang zur Bildung eines Durchgangslochs in dem faserverstärkten Verbundmaterial und/oder dem Metall ist.

17. Zerspanungsverfahren gemäß einem der Ansprüche 1 bis 16, worin ein Feuchtigkeitsgehalt, der in dem Gas enthalten ist, das dem Zerspanungsabschnitt und/oder dem Zerspanungswerkzeug zugeführt wird, 20 g/m³ oder weniger beträgt.

18. Zerspanungsverfahren gemäß einem der Ansprüche 1 bis 17, worin ein Ölgehalt, der in dem Gas enthalten ist, das dem Zerspanungsabschnitt und/oder dem Zerspanungswerkzeug zugeführt wird, 10 mg/m³ oder weniger beträgt.

19. Zerspanungsverfahren gemäß einem der Ansprüche 1 bis 18, worin ein zu zerspanender Gegenstand ein Material ist, das durch Überlagerung eines Metalls, das eine Titanlegierung oder eine Aluminiumlegierung umfasst, und eines faserverstärkten Verbundmaterials, das einen kohlenstofffaserverstärkten Kunststoff umfasst, derart, dass sie miteinander in Kontakt stehen, erhalten wird und das Zerspanen durchgeführt wird, wobei das faserverstärkte Verbundmaterial so angeordnet ist, dass es auf einer Seite liegt, die der Seite, in die das Zerspanungswerkzeug eintritt, näher ist als das Metall.

20. Verfahren zur Herstellung eines faserverstärkten Verbundmaterials, umfassend einen Schritt zum Zerspanen eines faserverstärkten Verbundmaterials, das einen kohlenstofffaserverstärkten Kunststoff umfasst, durch das Zerspanungsverfahren gemäß einem der Ansprüche 1 bis 19.

21. Verfahren zur Herstellung eines Metalls, umfassend einen Schritt zum Zerspanen eines Metalls, das eine Titanlegierung oder eine Aluminiumlegierung umfasst, durch das Verfahren gemäß einem der Ansprüche 1 bis 19.

## Revendications

1. Procédé de coupe pour couper un matériau composite renforcé de fibres et/ou un métal à l'aide d'une feuille d'entrée qui comprend une feuille de résine comprenant un lubrifiant solide choisi dans le groupe constitué par le graphite, le bisulfure de molybdène, le disulfure de tungstène, les composés du molybdène, les polytétrafluoroéthylènes et les polyimides, **caractérisé en ce que**
le matériau composite renforcé de fibres comprend un plastique renforcé de fibres de carbone,
le métal comprend un alliage de titane ou un alliage d'aluminium,
la coupe est effectuée en refroidissant une partie de coupe et/ou un outil de coupe à l'aide d'un gaz,
une quantité du gaz fourni à la partie de coupe et/ou à l'outil de coupe est de 5 à 300 l/min,
une surface de sortie de gaz dans un appareil pour fournir le gaz est de 7 mm² à 2 000 mm², et
une distance entre une sortie de gaz de l'appareil pour fournir le gaz et la partie de coupe et/ou l'outil de coupe est de 100 mm à 500 mm.

2. Procédé selon la revendication 1, dans lequel la feuille de résine comprend une résine soluble dans l'eau.

3. Procédé selon la revendication 1 ou 2, dans lequel la feuille de résine comprend une résine insoluble dans l'eau.

4. Procédé selon l'une quelconque des revendications 1 à 3, dans lequel la feuille de résine comprend deux couches de composition de résine ou plus.

5. Procédé selon l'une quelconque des revendications 1 à 4, dans lequel la feuille de résine a une épaisseur de 0,1 mm ou plus et de 20 mm ou moins.

6. Procédé selon l'une quelconque des revendications 1 à 5, dans lequel au moins une face de la feuille de résine comprend une feuille métallique.

7. Procédé selon la revendication 6, dans lequel une couche adhésive est formée entre la feuille métallique et la feuille de résine.

8. Procédé selon la revendication 7, dans lequel la couche adhésive est un revêtement de résine.

9. Procédé selon l'une quelconque des revendications 1 à 8, dans lequel une couche collante est formée sur une face qui est en contact avec le matériau composite renforcé de fibres et/ou le métal.

10. Procédé selon l'une quelconque des revendications 1 à 9, dans lequel la feuille d'entrée comprend un métal.

11. Procédé de coupe selon l'une quelconque des revendications 1 à 10, dans lequel la coupe est effectuée en disposant la feuille d'entrée sur une face d'entrée de l'outil de coupe dans le matériau composite renforcé de fibres et/ou le métal à couper.

12. Procédé de coupe selon l'une quelconque des revendications 1 à 11, dans lequel la coupe est un perçage.

13. Procédé de coupe selon l'une quelconque des revendications 1 à 12, dans lequel la feuille d'entrée comprend une feuille d'aluminium.

14. Procédé de coupe selon l'une quelconque des revendications 1 à 13, dans lequel la coupe est effectuée en refroidissant une partie de coupe et/ou un outil de coupe à l'aide d'un gaz ayant une température de 30 °C ou moins.

15. Procédé de coupe selon l'une quelconque des revendications 1 à 14, dans lequel l'outil de coupe utilisé pour couper est un foret constitué d'un carbure cémenté.

16. Procédé de coupe pour couper un métal selon l'une quelconque des revendications 1 à 15, dans lequel la coupe est un traitement destiné à former un trou traversant dans le matériau composite renforcé de fibres et/ou le métal.

17. Procédé de coupe selon l'une quelconque des revendications 1 à 16,
dans lequel
une teneur en humidité contenue dans le gaz fourni à la partie de coupe et/ou à l'outil de coupe est de 20 g/m³ ou moins.

18. Procédé de coupe selon l'une quelconque des revendications 1 à 17,
dans lequel
une teneur en huile contenue dans le gaz fourni à la partie de coupe et/ou à l'outil de coupe est de 10 mg/m³ ou moins.

19. Procédé de coupe selon l'une quelconque des revendications 1 à 18, dans lequel un objet à couper est un matériau obtenu en superposant un métal qui comprend un alliage de titane ou un alliage d'aluminium et un matériau composite renforcé de fibres qui comprend un plastique renforcé de fibres de carbone de manière à ce qu'ils soient en contact l'un avec l'autre, et la coupe est effectuée en disposant le matériau composite renforcé de fibres de manière à ce qu'il soit sur un côté plus proche d'un côté d'entrée de l'outil de coupe que le métal.

20. Procédé de production d'un matériau composite renforcé de fibres, comprenant une étape de coupe d'un matériau composite renforcé de fibres qui comprend un plastique renforcé de fibres de carbone par le procédé de coupe selon l'une quelconque des revendications 1 à 19.

21. Procédé de production d'un métal, comprenant une étape de coupe d'un métal qui comprend un alliage de titane ou un alliage d'aluminium par le procédé de coupe selon l'une quelconque des revendications 1 à 19.
